# EUROPEAN PATENT APPLICATION

(11) **EP 1 117 048 A1**
(43) Date of publication of application: **18.07.2001**
(21) Application number: 01100132.8
(22) Date of filing: 15.01.2001
(51) Int. Cl.: G06F 17/21

(54) **Method and device for representing data**

(30) Priority: 14.01.2000 EP 00100740; 14.01.2000 EP 00100211; 14.01.2000 EP 00100212; 14.01.2000 EP 00100739; 14.01.2000 EP 00100738
(71) Applicant: SUN MICROSYSTEMS, INC., Palo Alto, California 94303 (US)
(72) Inventor: Hofmann, Ralf, 22143 Hamburg (DE); Schulz, Torsten, 25421 Pinneberg (DE); Eilers, Bernd, 21107 Hamburg (DE); Pfohe, Thomas, 22143 Hamburg (DE)
(74) Representative: HOFFMANN - EITLE

(57) **Abstract**

A method for presenting data on a user device with presentation requirements relating to the presentation of said data on said user device, comprising the following steps:
a) receiving a request from said user device for said data by data presentation management means,
b) identifying said presentation requirements of said user device to said data presentation management means, and
c) selecting a presentation scheme for said data in accordance with said presentation requirements, so that said presentation scheme can be applied to said data to create presentable data to allow the presentation of said data on said user device.

## Description

### Field of the invention

The present invention relates to a method and a system for the individual representation of data.

### Background of the invention

Information requested by a user device naturally needs to be in a format to be understood by this specific user device. Therefore, in many instances information is only accessible to a certain group of user devices. For example, homepages of individuals or companies provided by a webserver over the internet are generally available only to specific user devices, namely computer systems supporting the regular homepage data format html. However, the access of other user devices to this information may also be desirable. Such user devices may be, for example, handheld computers or mobile phones.

Unfortunately, the Internet browsers that process and display the HTML homepages typically require over 50 Megabytes of storage, which is not available on handheld computers or mobile phones.

Alternative methods are available, for example, that permit mobile telephones to send and receive information from the Internet. Typically, a program executing on the telephone transmits a URL, or a representation of a URL to a server that translates the request, and retrieves the data over the Internet. The server then converts the retrieved content into a format that can be interpreted by the mobile telephone and transmits the data to the mobile telephone for display. See for example, U.S. Patent Number 5,809,415 of Rossmann entitled "Method and Architecture for an Interactive Two-Way Data Communication Network." Another similar approach is described in U.S. Patent No. 5,727,159, entitled "System In Which a Proxy-Server Translates Information Received From the Internet Into a Form/Format Readily Usable by Low Power Portable Computers," of Kikinis issued on March 10, 1998. In this approach, a specialized browser must be installed on each device that communicates with a proxy-server that in turn communicates with the Internet. A device that does not have the specialized browser, or cannot execute the specialized browser cannot retrieve or display content using the proxy-server.

Thus, the prior art teaches that it is necessary to develop an independent technique to provide access to particular information. For example, the prior art technique for mobile phones was not used on portable computers and conversely.

### Object of the invention

Therefore, the object of the present invention is to provide a method and a system allowing the access of data, particularly over a network, to a variety of different user devices, including mobile phones and handheld computers.

### Summary of the invention

This object is achieved by the inventive method for presenting data on a user device with presentation requirements relating to the presentation of this data on the user device, comprising the following steps:
a) receiving a request from the user device for the data by data presentation management means,
b) identifying the presentation requirements of the user device to the data presentation management means,
c) selecting a presentation scheme for the data in accordance with the presentation requirements, so that the presentation scheme can be applied to the data to create presentable data to allow the presentation of the data on the user device.

Herein, the step c) may be carried out by the data presentation management means. The inventive method may also comprise the step d) of applying the presentation scheme to the data to create presentable data to allow the presentation of the data on the user device. This step d) may be carried out by the data presentation management means. However, step d) may also be carried out by the user device or by any other device which applies the presentation scheme and provides the presentable data to the user device.

The aforementioned method may be supplemented by the further step e) of transmitting the presentable data to the user device to allow the presentation of the data on the user device.

The data may be retrieved by the data presentation management means before the application of the selected presentation scheme to the data. In another embodiment of the present invention the data may be retrieved by the user device itself. Then, the selected presentation scheme may be applied by the user device or by the presentation management means. The latter would, for example, apply, if the data retrieved by the user device would be transferred to the presentation management means for applying the selected presentation scheme and than be re-transferred to the user device.

In the scope of the present invention a method is also provided for obtaining data by a user device having presentation requirements relating to the presentation of the data on the user device, comprising the following steps:
a) submitting a request by the user device to data presentation management means for obtaining the data from the data presentation management means, the request causing the identification of the presentation requirements of the user device to the data presentation management means, the selection of a presentation scheme for the data in accordance with the presentation requirements of the user device by the data presentation management means, the request further causing the application of the selected presentation scheme to the data to create presentable data, and
b) receiving in the user device the presentable data to allow the presentation of the data by the user device.

Furthermore, a method is provided for obtaining data by a user device having presentation requirements relating to the presentation of the data on the user device, comprising the following steps:
a) submitting a request by the user device to data presentation management means for obtaining the data from the data presentation management means, the request causing the identification of the presentation requirements of the user device to the data presentation management means and the selection of a presentation scheme for the data in accordance with the presentation requirements of the user device by the data presentation management means,
b) receiving in the user device the selected presentation scheme for the data,
c) applying in the user device the selected presentation scheme on the data to create presentable data.

Herein, the user device may receive the data via data management presentation means, as described earlier.

Data in the scope of the present invention is the representation of information. This information can be presented by any suitable means, for example, text, picture, sound, movie or action. Different kinds of information can also be combined. This data may be accessible to the user device, for example, via a network. For the retrieving of the data certain requirements of the user device have to be considered. Such requirements may be of different type. They include presentation requirements. They may further have different origin. For example, the requirements may be caused by the software on the user device, which may support only specific kinds of information. It may also be possible that the requirements depend of the hardware of the user device, if the user device can, for example, present information merely via a loudspeaker. User depending requirements are also possible in the scope of the present invention. This may be caused by certain preferences of the user as well as by a handicap.

In the scope of the present invention data includes also functions. Such functions may be, for example, actions for presenting data, for example, movies and sound as well as function for processing on data like, for example, calculation functions or spellchecker.

A user device according to the present invention may be, for example, a computer system comprising at least a processor, a storage medium and an i-/o-interface. Via this i-/o-interface the user device may be connected to the source of the data. It will also be possible that the requested data is stored on the storage medium of the user device. Regularly, the user device comprises also input and output devices connected via the i-/o-interface.

The requested data may be retrieved via at least one portlet. In the context of the present invention a portlet is understood to be means for providing the requested data from a data source, for example, from a certain homepage or data base.

Two or more portlets may be arranged in tree-like organization. This tree-like organization may be presented to a user of the user device, for example, on a screen of the user device, so that this user has the possibility to easily choose among the offered portlets.

The presentation requirements of the user device may be determined based on information about the user device. For example, if the data presentation management means are informed about the type of the user device they may conclude therefrom the presentation requirements of the user device.

In the context of the present invention data presentation management means are hardware or - generally - software means for managing the presentation of data on a user device. Their exact functionality depends on the implementation of the present invention. The functionality of the data presentation management means includes at least the selection of the presentation scheme for the requested data in accordance with the presentation requirements of the user device. For this purpose the data presentation management means must be informed about the presentation requirements of the user device. Furthermore, the functionalities of the data presentation management means may include the application of the selected presentation scheme on the requested data in order to create presentable data to be presented by the user device. This requires the availability of the requested data for the data presentation management means. The retrieval of this data may also be carried out by the data presentation management means.

The presentation schemes may be defined, for example, in an extensible stylesheet language (XSL). XSL is a language for creating a stylesheet which describes how content being formatted in an extensible markup language (XML) will be presented to a user device. The presentation scheme may describe, for example, if a certain content defined in XML will be displayed, where this content will be displayed and how it will be displayed.

The methods of the present invention may be implemented in a computer program (computer program product), including comprehensive office applications. A computer program product comprises a medium configured to store or transport computer readable code, or in which computer readable code may be embedded. Some examples of computer program products are: CD-ROM disks, ROM-cards, floppy disks, magnetic tapes, computer hard drives, servers on a network and carrier waves and digital signals transmitted over a telecommunication link or network connection.

Such a computer program may be stored on any common data carrier like, for example, a floppy disk or a compact disk (CD), as well as on any common computer system's storage facilities, like hard disks. Therefore, the present invention also relates to a data carrier for storing a computer program for carrying out the inventive methods. The present invention also relates to a method for using a standard computer system for carrying out the present inventive methods.

In the scope of the present invention a computer system is provided comprising at least a processor, a memory and an i-/o-interface for representing data depending on presentation requirements of a user device relating to the presentation of the data on the user device, comprising data presentation management means, wherein the data presentation management means include:
a) at least one receiving module for receiving a request of the user device for the data,
b) at least one identifying module for identifying the presentation requirements of the user device, and
c) at least one selecting module for selecting a presentation scheme for the data in accordance with the presentation requirements.

Furthermore, the computer system may comprise
d) at least one retrieving module for retrieving the data, and
e) at least one applying module for applying the selected presentation scheme to the data to create presentable data which may be presented by the user device.

The retrieving and the applying functions may also be carried out in a user device or in a computer system being accessible to the user device. Therefore, the retrieving module and the applying module may also be located in the user device or in any computer system which is connectable or connected to the user device and which is able to deliver the result of the application of the presentation scheme, the presentable data, to the user device.

The aforementioned computer system may be supplemented by a transmitting module e) for transmitting the presentable data to the user device to allow the presentation of the requested data on the user device.

According to an embodiment of the present invention, a method and a system allow access to data, particularly over a network, to a variety of different user devices, including mobile phones and handheld computers. Unlike the prior art methods, this method and system are not limited to devices that have either a predefined configuration, or predefined software loaded on the device. Rather, the presentation requirements of a device are determined, and a document compatible with those presentation requirements is generated by a presentation manager server system.

Consequently, the problems associated with updating and providing specialized software to each type of user device have been eliminated. Also, it is no longer necessary to write specialized software for each type of user device that is provided data from a single content source, or for each content source that has a different data format.

In one embodiment, a method for presenting data on a user device comprises:
receiving, by a presentation manager, a request from the user device for data from any one of a plurality of different data sources,
identifying presentation requirements of the user device to presentation manager, and
selecting a presentation scheme for the data in accordance with the presentation requirements of the user device, where the presentation scheme can be applied to the data to generate presentable data for the user device.

In one embodiment, this method also includes applying the presentation scheme to the data to create the presentable data. This operation is performed by the presentation manager, by the user device, or by any other device, which applies the presentation scheme and provides the presentable data to the user device. The aforementioned method may be supplemented by transmitting the presentable data to the user device to allow the presentation of the data on the user device.
In another embodiment of the present invention, a method also is provided for obtaining data by a user device having presentation requirements relating to the presentation of the data on the user device. This method includes submitting a request to obtain data by the user device to a presentation manager coupled to the user device. The request causes the identification of the presentation requirements of the user device to the presentation manager, and the selection of a presentation scheme for the data in accordance with the presentation requirements of the user device by the presentation manager. The request further causes the application of the selected presentation scheme to the data to create presentable data. This method further includes receiving in the user device the presentable data to allow the presentation of the data by the user device.

In one embodiment of the present device, the data requested is retrieved via at least one portlet coupled to the presentation manager. Herein, a portlet is understood to be means for providing the requested data from a data source, for example, from a certain homepage or database to the presentation manager.

Two or more portlets may be arranged in tree-like organization. This tree-like organization is presented to a user of the user device, for example, on a display screen of the user device, so that this user has the possibility to easily choose among the content offered via the portlets.

In one embodiment, the presentation requirements of the user device are determined based on information about the user device. For example, if the presentation manager is informed about the type of the user device, the presentation manager can determine therefrom the presentation requirements of the user device and select a presentation scheme based thereon.

Presentation schemes may be defined, for example, in an extensible style sheet language (XSL). The presentation scheme may describe, for example, if a certain content defined in XML is displayed, where this content is displayed and how this content is displayed.

In another embodiment of the method of this invention, a request is received from a user device. The request was generated in response to a selection of a portlet identification object on the user device. The request is transferred to a portlet. The portlet retrieves data specified in the request over a network. This data has one format in a plurality of source data formats.

The request also is analyzed to determine a user data format that is supported by the user device. A presentation scheme to convert the data from the source data format to the user data format is then selected. The retrieved data is converted from the source data format to the user data format using the presentation scheme.

In one embodiment of selecting a presentation scheme includes selecting an XSL-stylesheet. The received request includes, in another embodiment, a command. The command is selected from a group of commands consisting of load, save, article, and channel.

In yet another embodiment of the present invention, a web server receives a request from a user device. The request was generated by selection of a portlet identification object on the user device. The web server analyzes the request to determine whether the request is for content associated with a portlet. The request is transferred to a presentation manager upon the web server determining that the request is for content associated with a portlet. The presentation manager passes the request to a portlet. The portlet retrieves data specified in the request over a network. The retrieved data has a source MIME type.

The presentation manager analyzes the command to identify a user MIME type, and then selects a presentation scheme from a plurality of presentation schemes based upon the user MIME type and the source MIME type. The presentation manager converts the data from the source MIME type to the user MIME type using the presentation scheme.

Thus, in one embodiment of the present invention, a presentation manager server system includes a web server, a presentation manager coupled to the web server, and at least one portlet coupled to the presentation manager. The at least one portlet may comprise any one of a mail portlet, a resource description framework portlet, and an internal network information portlet. A portlet is associated with content that is retrieved by that portlet. The presentation manager server system also may include a storage medium having stored thereon a plurality of presentation schemes.

In one embodiment of the presentation manager server system the web server comprises a servlet container, and the presentation manager comprises a servlet.

A computer program product, according to one embodiment of the present invention has stored thereon computer instructions for a method comprising:
receiving a request from the user device for the data;
identifying presentation requirements of the user device; and
selecting a presentation scheme for the data in accordance with the presentation requirements wherein upon application of the presentation
scheme to the data, new data presentable on the user device is generated.

A computer program product, according to another embodiment of the present invention has stored thereon computer instructions for a method comprising:
receiving a request from a user device generated by selection of a portlet identification object on the user device;
transferring the request to a portlet wherein the portlet retrieves data specified in the request over a network and further wherein the data has one format in a plurality of source data formats;
analyzing the request to determine a user data format that is supported by the user device;
selecting a presentation scheme to convert the data from the source data format to the user data format; and
converting the data from the source data format to the user data format using the presentation scheme.

A computer program product, according to yet another embodiment of the present invention has stored thereon computer instructions for a method comprising:
receiving a request from a user device generated by selection of a portlet identification object on the user device by a web server;
analyzing the request by the web server to determine whether the request is for content associated with a portlet;
   transferring the request to a presentation manager upon determining that the request is for the content associated with a portlet;
   passing the request to the portlet by the presentation manager wherein the portlet retrieves data specified in the request over a network and further wherein the data has a source MIME type;
   analyzing the request to identify a user MIME type;
   selecting a presentation scheme from a plurality of presentation schemes based upon the user MIME type and the source MIME type; and
   converting the data from the source MIME type to the user MIME type using the presentation scheme.

### Brief description of figures

The present invention will now be described in detail on the basis of examples, where reference will be made to the appended figures, which show:
Figure 1A illustrates one embodiment of a network including a plurality of user devices coupled to a presentation manager server system according to one embodiment of the present invention.
Figure 1B is a more detailed illustration of one embodiment of user device 102A of Figure 1A including portlet icons according to one embodiment of the present invention.
Figure 2A is a process flow diagram according to one embodiment of the present invention.
Figure 2B is a process flow diagram for selecting portlets that can be accessed by a user device according to one embodiment of the present invention.
Figure 3 is a more detailed illustration of the presentation management server system according to one embodiment of the present invention.
Figure 4 is a more detailed process flow diagram of the retrieve scheme operation of Figure 2A.
Figure 5 is sequence diagram for the portlet manager according to one embodiment of the present invention.
Figures 6 is an example of a class PortletManager that is used to instantiate the portlet manager object according to one embodiment of the present invention.
Figures 7A and 7B are an example of method do Post and do Get according to one embodiment of the present invention.
Figures 8A and 8B are an example of a class CommandFactory that includes method producecommand according to one embodiment of the present invention.
Figures 9A to 9E are an example of a class LoadCommand according to one embodiment of the present invention.
Figures 10A and 10B are an example of a class SaveCommand according to one embodiment of the present invention.
Figures 11A to 11J are one embodiment of class ChannelCommand according to one embodiment of the present invention.
Figure 12 is a block diagram of modules in the portlet manager according to one embodiment of the present invention.
Fig. 13 is a schematic representation of an example for the method and system of the present invention,
Fig. 14 is schematic representation of the screen print of a user device using the present invention,
Fig.15 is a flow chart showing obtaining the presentation requirements of a user device,
Fig.16 is a flow chart showing the steps to be carried out by a method according to the present invention, and
Fig.17 is flow chart showing the operation of a method of the present invention.

### Detailed description of invention

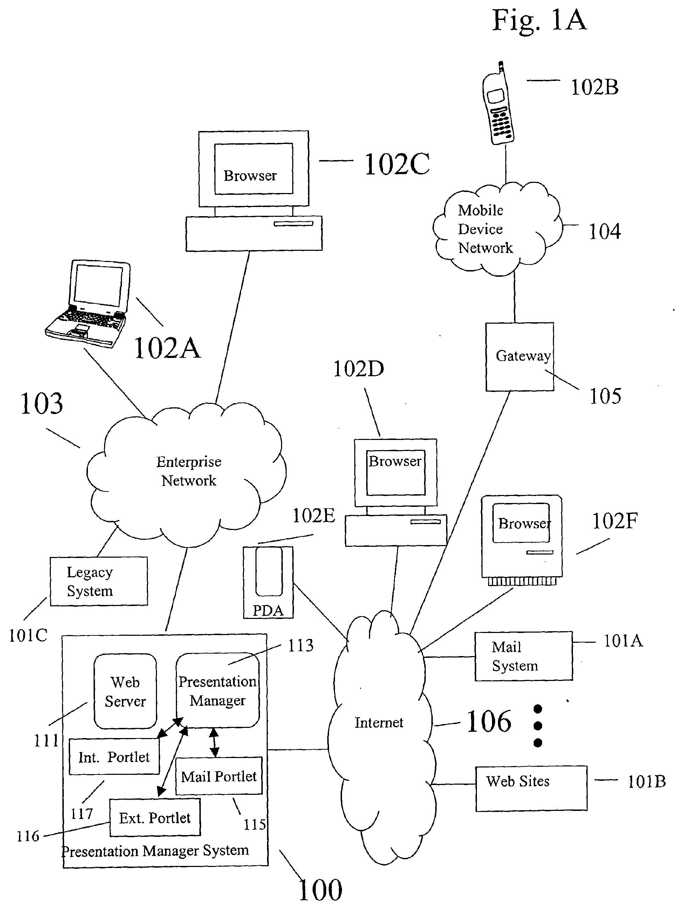

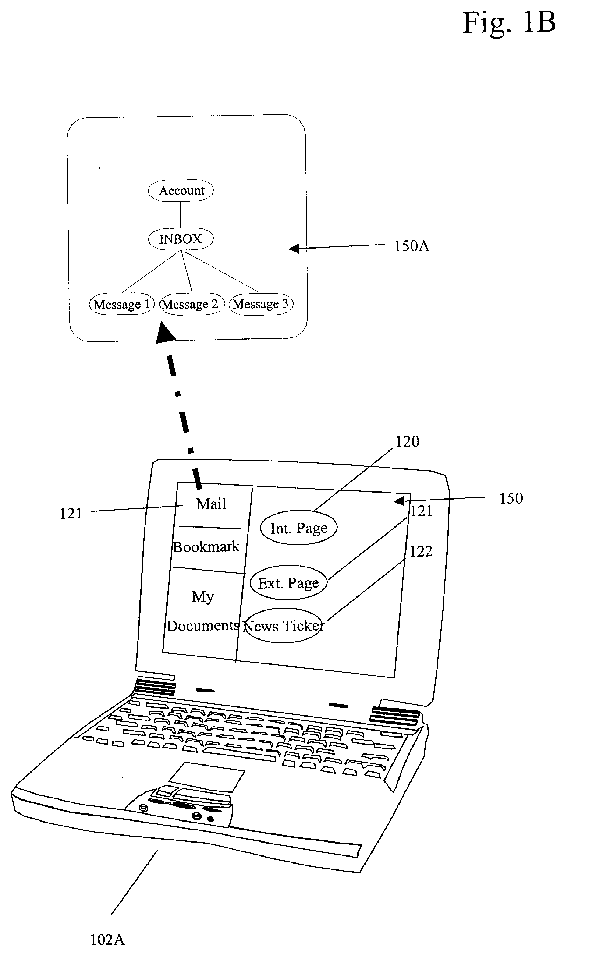

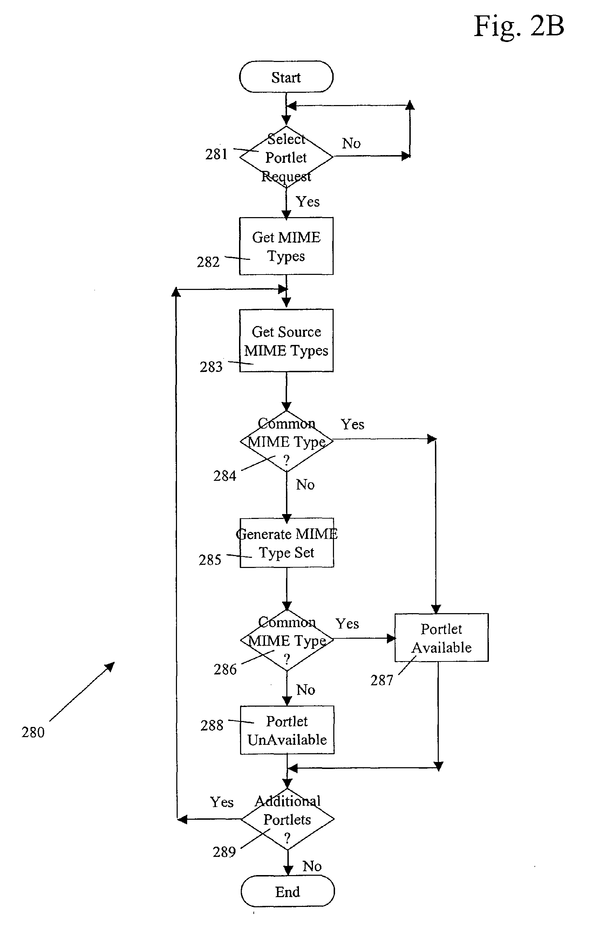

According to the principles of this invention, a single presentation manager 113, executing on a presentation manager server system 100, accesses information from any one of plurality of content sources 101A to 101C in response to a request from any one of a plurality of user devices 102A to 102F. Each of the plurality of user devices 102A to 102F may have different requirements for presentation of information retrieved by presentation manager 113, i.e., different presentation requirements. When a request for information is received from a particular user device, presentation manager 113 retrieves the information, identifies the presentation requirements of the particular user device, and then transforms the information, if necessary, using a presentation scheme specific to the user device so that the information can be presented on the particular user device.
The presentation requirements may be any conditions or limitations on the presentation of data on the user device, for example, kind and size of display on the user device, type of programming language or data format supported by the user device, or any other presentation requirements of the user device, for example, of the processor or the memory. These presentation requirements not only may result from technical necessities, but also may result from an individual user's demands or wishes. The user is not constrained to accessing data in a format that is compatible with the one particular device that the user happens to be using as in the prior art.
Hence, presentation manager server system 100 solves the prior art information access limitations by giving users access from whatever device is available at the time, through a single system entry point, to a complete complement of data. As explained more completely below, presentation manager server system 100 frees a user from time and location constraints when accessing the complete complement of data.
A user can access data on Internet 106 and/or enterprise network 103 from almost any available device, e.g., any one of a portable computer 102A, a mobile telephone 102B, a workstation 102C, a home personal computer (PC) 102D, a personal digital assistant 102E, or an Internet café machine 102F. No longer is a user limited to using a particular device with pre-installed software to access a particular type of data accessible via a network to which the device is coupled.
For example, a user taps an icon displayed on PDA 102E to generate a request for a sales report that is stored in a database on legacy system 101C. The request is sent over Internet 106 to presentation manager 113 that, in turn, retrieves the sales report via an internal portlet 117, transforms the sales report according to a presentation scheme for PDA 102E, and transmits the transformed sales report to be displayed on PDA 102E. A similar transaction could be done using Internet café machine 102F, or perhaps mobile telephone 102D.
Each user device in the plurality of user devices 102A to 102F accesses information through the same portlet. However, in a first embodiment, presentation manager 113 retrieves the information using the portlet and then transforms the information using a presentation scheme that is specific to the user device so that the retrieved information can be displayed by the user device. Alternatively, presentation manager 113 could provide the presentation scheme and the retrieved data to the user device and the transformation of the retrieved data could be done on the user device itself.
Plurality of devices 102A to 102F is illustrative only and is not intended to limit the invention to the particular devices illustrated. The devices could also include, for example, a POTS telephone, a pager, a set-top box connected to a television, a network appliance, or any other device that is connectable to a network and can issue a request for data, as described more completely below, and display the data received in response to the request. This embodiment of the present invention is not limited to a particular type of user device or to a particular group of user devices as in the prior art, or to user devices that are running a particular software program.
The user can access multiple content sources via presentation manager server system 100. Different types and formats of data from different applications can all be accessed and processed within a single user interface. Further, data from external sources, such as stock quotes, weather forecasts, or perhaps news tickers from web-based service providers can be accessed using the same single user interface. According to the principles of this invention, presentation manager server system 100 is a comprehensive client/server offering that enables users, from almost any device anywhere, to access and view different types of data from a wide variety of content sources.
As an example, consider user device 102A (Figs. 1A and 1B) that is a portable computer. The display on display screen 150 includes, within a work area, three portlet icons, e.g., an internal page icon 120, an external page icon 121, and a news ticker icon 122. In this example, the use of icons to represent portlets is illustrative only and is not intended to limit the invention to this specific embodiment. For example, a list of text names could also be used. In general, a portlet identifier is provided to a user, and upon selection of the portlet identifier by the user, a request is sent to presentation management server system 100 to retrieve and return content associated with the portlet identifier.
In an explorer region on display screen 150 is a mail icon 121. If the user selects mail icon 121, a hierarchical view is generated on display screen 150A as illustrated in Figure 1B, each entry of which represents a portlet that can be used, in one embodiment, to request information from presentation manager server system 100. Corresponding to each icon displayed on user device 102A is a portlet, e.g., portlets 115 to 117 that are coupled to presentation manager 113, as explained more completely below.
Alternatively, icons 120 to 122 on display screen 150 could each expand into a hierarchy of icons. Moreover, upon selection of an icon, typically by the user placing a cursor on the icon and clicking a mouse, the user could be presented, for example, with an input screen in which the user input commands for acting on data. When the user completes the input screen, a request that includes the commands for acting on data is dispatched to presentation manager server system 100.
Thus, according to the principles of this invention, a portlet icon, or more generally, a portlet identifier, is not limited to issuing only a request to retrieve information. The user-initiated request can also include commands that perform operations on data, for example. However, in each case, a portlet icon is associated with a specific source of information, sometimes called content, as explained more completely below.
Instead of the screen portlet icons in Fig. 1B, the portlets may also be offered to the user in the form of a text based listing on the display of the user device. This listing may be put together in presentation manager 113, for example, in the eXtensible Markup Language (XML) format. In addition, the user can obtain a list of information sources available through presentation manager server system 100 by issuing a request to presentation manager 113 that is not addressed to a specific portlet. With this list, the user can select portlets of interest to the user, as explained more completely below with respect to Fig. 2B.

Thus, an individual user can personalize the user device by specifying which service providers from among the ones the organization has made available via portlets, the user wants to use. To put it another way, the user chooses which portlets the users wishes to be included on the desktop as illustrated in Fig. 1B. (A portlet is the smallest unit of information that can be put in a portal.) Hence, presentation manager server system 100 eliminates prior art limitations on a single user system on a network accessing content on any desired provider system that is coupled to the network.

When a user selects one of the icons on display screen 150, user device 102A, which is coupled to a network server 111 by an enterprise network 103, issues a request associated with the selected icon. The request specifies (i) a suitable address to the location where the content associated with the request is stored, for example, the Internet address of a homepage in the form of a uniform resource locator (URL), and (ii) information concerning either the types of data that can be processed and displayed by user device 102A, e.g., MIME types, and/or, an identifier that indicates the processing and display capabilities of user device 102A. In addition, the request can include operations that are to be performed on the data, or using the data, e.g., find all web sites including the word or words specified in the request.

Enterprise network 103 is illustrative only of one embodiment of a network. The particular type of network connecting a user device to presentation manager server system 100 is not essential, and may be the Internet or any other permanent or temporary network, for example a local area network.

Upon receipt of the request, network server 111 in presentation manager server system 100, which in one embodiment is a web server, determines that the request is for data accessed via presentation manager 113 and transfers the request to presentation manager 113.

Upon receipt of the request from network server 111, presentation manager 113, as explained more completely below, passes the request to the portlet associated with the request. For example, if the user issued a request for all new mail messages, presentation manager 113 would pass the request to mail portlet 115 that is associated with mail system 101A. If the request was for information on an external network, presentation manager 113 passes the request to external portlet 116 that may be associated, for example, with one of web sites 101B. In one embodiment, portlet 116 accesses web sites 101B that provide content using the Resource Description Framework (RDF).

The portlet that receives the request from presentation manager 113 retrieves the requested data and returns the data to presentation manager 113. Typically, each of the plurality of portlets 115 to 117 accesses data, i.e., content, in a different format. Of course, one or more portlets could be configured to retrieve data having the same format. For example, text based information may be provided in the HTML format as well as in the WML format.

In addition to passing the request to the appropriate portlet, presentation manager 113 identifies the presentation requirements of the user device for the requested data. Using the identification of the presentation requirements, presentation manager 113 selects a presentation scheme for the requesting user device.

As used herein, the presentation scheme for a user device is the totality of the configuration information needed to extract data from a first format and transform the data into new data for presentation on that user device. In one embodiment, as explained more completely below, the presentation schemes include a plurality of eXtensible Style sheet Language (XSL)-stylesheets that is stored on a storage medium for access by presentation manager 113. Each XSL-stylesheet transforms eXtensible Markup Language (XML) data to new data that can be processed and displayed by a particular user device, sometimes referred to as user device presentable data.
In selecting a presentation scheme, in one embodiment, presentation manager 113 determines whether the request from the user device includes a specific identification of a presentation scheme; a list of MIME types that the user device is capable of displaying; and either a user identification and/or a device identification. If the user request specifies a specific presentation scheme, for example, a particular XSL-stylesheet, presentation manager 113 selects that stylesheet as the presentation scheme. If a MIME type is specified in the request and presentation manger 113 has an XSL-stylesheet for transforming the requested content to that MIME type, this XSL-style sheet is selected. If the requested content is in a MIME type that is in the list of MIME types in the request, presentation manager 113 simply passes the retrieved content straight thru. If presentation manager 113 cannot identify a specific presentation scheme for the requested data, presentation manager 113 simply passes the retrieved content straight thru, in one embodiment. Thus, in each instance, presentation manager 113 identified the presentation requirements based upon information specified in the request, and selected an appropriate presentation scheme.

The presentation scheme selected by presentation manager 113 is retrieved and loaded into a local memory. When the requested data is available in a memory addressable by presentation manager 113, presentation manager 113 uses the stored presentation scheme to process the stored data and thereby generate user device presentable data, which may be presented in accordance with the requirements of user device 102A that transmitted the original request. Finally, the user device presentable data is transferred to user device 102A over the network coupling user device 102A to presentation manager server system 100.

Hence, through use of a dynamic content channel, e.g., a portlet, a highly customizable content page may be produced for any individual client system. Moreover, a particular user device is not limited to accessing content in a format identical to that associated with the user interface in use on the user device. Consequently, the user's ability to access a wide variety of content sources independent of the characteristics of the particular user device is further enhanced with the portlets in this embodiment of the invention.

As used herein, a user device and/or a computer system includes at least a processor, a storage medium, and an I/O-interface. In the context of the present invention, data refers to any type of information, which is arranged in certain order to be accessible by a computer system. The data to be accessed may also include one or more functions or functionalities provided to the user of a user device. Functions are, in this context, possibilities given to the user to initiate actions beyond the mere retrieval or display of information, for example, a search on the Internet for a certain publication or the initialization of a software program on a remote server carrying out some operations in response to the user device's request.

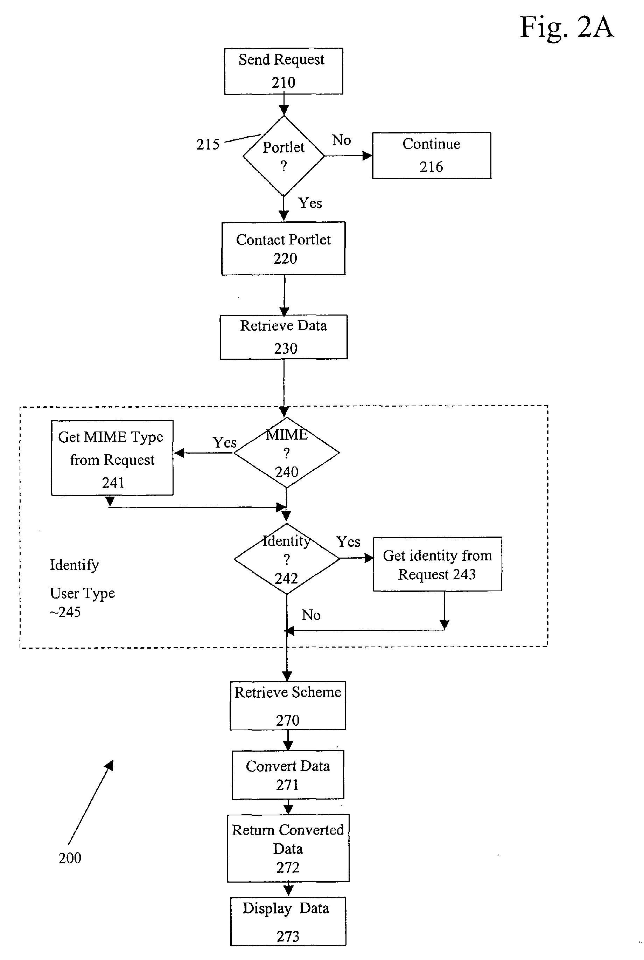

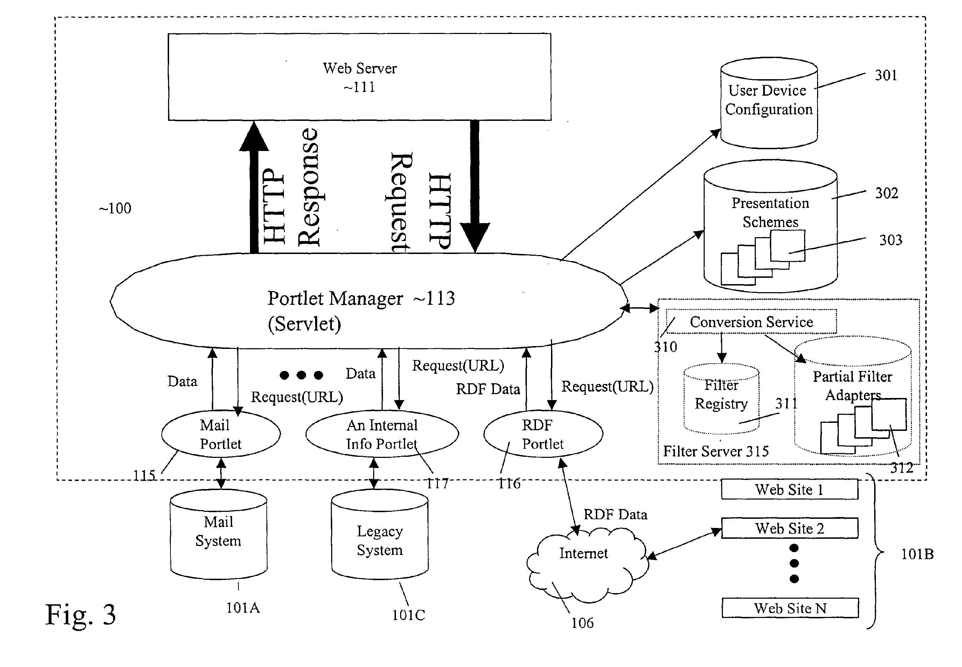

Figure 2A is a process flow diagram of one embodiment of a method 200 the present invention. Figure 3 is a more detailed block-level diagram of one embodiment of presentation manager server system 100 that implements method 200 of Figure 2A. In this embodiment, network server 111 is a web server 111, and presentation manager 113 is a portlet manager 113.

As explained above, a user initiates a request on a user device by selecting a portlet identifier, e.g., an icon, for example, that represents a particular instance of data that is accessible via a particular portlet in presentation manager server system 100. In this embodiment, an icon representing a portlet is only selectable for display on display screen 150 (Fig. 1B) if the data provided by the portlet may be presented by the user device. For example, if the user device does not support graphics, a portlet, which provides data with the MIME type image/jpeg, would not be available for selection for display on display screen 150 of device 102A.

In one embodiment, this pre-selection of portlets offered to the user is made by a comparison of the MIME types supported by the user device and the MIME type of data for each of the portlets. Fig. 2B is a process flow diagram of a method 280 that is used in one embodiment of the present invention to preselect portlets that are made available to a particular user device. Method 280 is not started unless a user issues a request to select one or more portlets for a particular device. This is represented by preselect portlet for access request check operation 281 that typically is part of a graphic user interface event handler, or part of a windowing system event handler.

Upon the user issuing a request to preselect one or more portlets, check operation 281 designates the portlet selected, or one of the portlets selected, as the current portlet and transfers processing to get user MIME types operation 282. In operation 282, presentation manager server system 100, in this embodiment, obtains the MIME types supported by the user device, i.e., obtains the user MIME types, and transfers to get source MIME types operation 283.

In operation 283, the source MIME types supported by the current portlet are retrieved and processing transfers to common MIME type check operation 284. If at least one of the user MIME types and one of the source MIME types are the same MIME type, processing transfers to portlet available operation 287, and otherwise to generate MIME type set operation 285.

In generate MIME type set operation 285, presentation schemes 303 are used to generate another set of MIME types, which are the MIME types produced when presentations schemes 303 are applied to the source MIME types. Operation 285 transfers processing to common MIME type check operation 286.

If at least one of the user MIME types and one of the MIME types in the set of MIME types generated by operation 285 are the same MIME type, processing transfers to portlet available operation 287, and otherwise to portlet unavailable operation 288.

In portlet available operation 287, the current portlet is flagged as available to the user device and an appropriate response is supplied to the user device. For example, the portlet icon could be installed on the user's desktop.

In portlet unavailable operation 288, the current portlet is flagged as unavailable. In this case, a message is sent to the user that access to the portlet is not available from this user device.

Both operations 287 and 288 transfer to additional portlets check operation 289.

If the user requested to preselect more the one portlet, the next portlet in the user request is identified as the current portlet, and operations 283 to 288 are repeated, as appropriate. If the user only requested to preselect one portlet, or all of the portlets have been processed, check operation 289 passes to the end operation that cleans up and exits.

In the above example relating to graphics, the presentation capabilities of the user device did not support graphics. The comparison with the MIME type of data defined by the various portlets shows that a portlet defining image/jpeg as its MIME type of data cannot be supported by this user device. Accordingly, the user device via method 280 would be denied access to this particular portlet.

Method 280 may be made at any suitable location, for example, in the user device as well as in web server 111, in portlet manager 113, or in the respective portlet itself. Consequently, in the following description, when user device submits a request in operation 210, no subsequent checking is done to assure that the requested data can be displayed on the user device. However, in another embodiment, the user is allowed to send requests to all available portlets, and as each request is sent, if the request cannot be processed for whatever reason, an error message is returned to the user device.

The request transmitted in send request operation 210 (Fig. 2A) includes at least a description of the requested data. Such a description may be, for example, the URL of the data. The request typically also includes the MIME type or types supported by the user device, e.g., wireless application protocol (WAP) for mobile phone 102B. The request may also include either or both of the identity of the user device and the identity of the user of the user device. As explained more completely below, the request may further include a command, such as channel, load, save, or article.

The request from the user device in operation 210 goes over a network to server 111, which in this embodiment is a web server 111. In one embodiment, web server 111 is the Tomcat server supplied by The Apache Software Foundation, 1901 Munsey Drive, Forest Hill, MD 21050-2747, U.S.A. However, in this embodiment, any HTTP server that supports the functionality and operations described herein can be used as web server 111. In one embodiment, web server 111 is a servlet container, and portlet manager 113 is implemented as a servlet.

In portlet check operation 215, web server 111 analyzes the request from the user device, sometimes referred to as the original request, to determine whether this request has to be processed by portlet manager 113. The alternative is to process the request directly by web server 111.

Check operation 215 can be implemented in various alternative ways. In one embodiment, deployment descriptors as defined in the JAVA 2 Enterprise Edition are used and checked in operation 215 to determine where to direct the user request. The JAVA 2 Platform Enterprise Edition Specification, v1.2, Sun Microsystems, Inc., Palo Alto, CA (1999) and the JAVA Servlet Specification, v2.2, Sun Microsystems, Inc. Palo Alto, CA (1999) are incorporated herein by reference to show the level of skill in the art. Based upon the deployment descriptors, if the request is for web server 111, processing transfers to continue operation 217 and conventional processing continues. Otherwise, the request is forwarded to portlet manager 113 and processing transfers to contact portlet operation 220.

In another embodiment, the decision in check operation 215 is based on the MIME type of the requested data, i.e., the MIME type of the data located at the URL in the request, and the MIME type supported by the user device. If the MIME type of the requested data and the MIME type supported by the user device are identical or at least compatible, the request is processed by web server 111. This condition is frequently fulfilled, for example, if a browser, which is able to handle and to process data in XML, requests a homepage, which is also formatted in XML.

Thus, if the request is supported by web server, 111, processing transfers to continue operation 216 and conventional processing continues. Otherwise, the request is forwarded to portlet manager 113 and processing transfers to contact portlet operation 220.

Portlet manager 113 may be implemented in software within web server 111, or may be installed on a separate computer system, which is connected or connectable to web server 111. In one embodiment, portlet manager 113 is implemented as a servlet that executes on web server 111.

Typically, portlet manager 113 is not continually executing on web server 111, and so if a request is forwarded to portlet manager 113 in contact portlet operation 220, portlet manager 113 is started and then the request is forwarded to portlet manager 113 for processing.

Portlet manager 113 forwards the request to the appropriate portlet. The forwarding of the request to a specific portlet completes contact portlet operation 220. The portlet retrieves the data in retrieve data operation 230, and processing in portlet manager 113 transfers to MIME check operation 240 within identify user type operation 245. In Figure 2A, the operations are shown as sequential for ease of illustration only. This is not intended to limit the invention to this specific sequence of operations. The specific sequence will depend upon the computer system used and the specific implementation of this embodiment.

The request from the user device contains information about the presentation requirements of the requesting user device, or contains information about the identity of the user device, or contains both. If the request contains one or more MIME types processing transfers to get MIME type 241 and otherwise to identity check operation 242.

In get MIME type from request operation 242, portlet manager 113 extracts a list of MIME types supported by the user device from the request including a preferred MIME type, if a preferred MIME type is specified. Operation 241 transfers to identity check operation 242.

In identity check operation 242, portlet manager 113 determines whether the request included identification information. If identity information is included processing transfers to get identity from request operation 243 and otherwise to retrieve scheme operation 270. Get identity from request operation 243 retrieves the device identification from the request and transfers to retrieve scheme operation 270.

Operations 242 and 243 both transfer to retrieve scheme operation 270. In retrieve scheme operation 270, portlet manager 113 uses the information extracted from the request to retrieve a presentation scheme for the user device from a plurality of presentation schemes 303 stored on storage unit 302. In one embodiment, the retrieved presentation scheme is loaded in a memory accessible by portlet manager 113. Retrieve scheme operation 270 transfers processing to convert data operation 271.

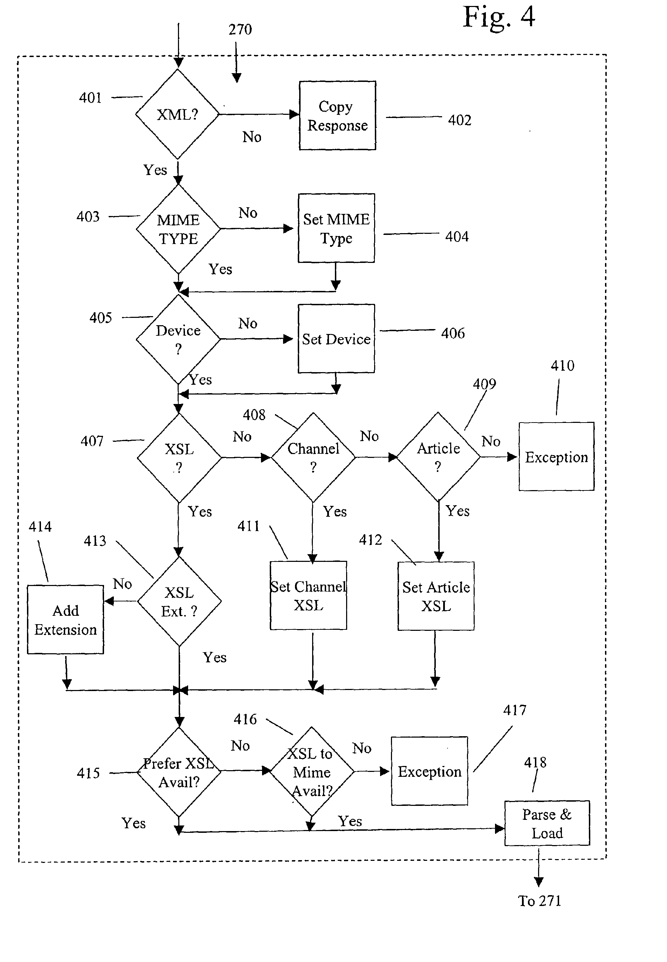

Figure 4 is a more detailed process flow diagram of one embodiment of retrieve scheme operation 270. XML check operation 401 determines if the response content type is other than an XML format supported by portlet manager 113. If the response content type is other than an XML format, processing transfers to copy response operation 402 and otherwise to MIME type check operation 403. Check operation 401 and copy response operation 402 are optional.

In this embodiment, only transformations that utilize an XSL-stylesheet are supported, and so if the response content is not in a supported XML format, the response content cannot be transformed. Accordingly, copy response operation 402 copies the response information directly to web server 111 that can in turn send the copied response back to the user device for display. Of course if other transformations were supported, e.g., a JAVA class that extracted data from certain MIME types and inserted the data into an HTML template that could be returned to the user device, the applicability of each of the other transformations would be tested before defaulting of copy response operation 402.

If XML check operation 401 determines that the response content type is a supported XML format, a path to the appropriate XSL-style sheet in a plurality of XSL-style sheets 303 stored on storage unit 302 is constructed. MIME type check operation 403 determines whether the request from the user device included a preferred MIME type. If a preferred MIME type was obtained in operation 241, processing transfers to device check operation 405, and otherwise to set MIME type operation 404. Set MIME type operation 404 uses the session identification to retrieve a preferred MIME type from user device configuration information stored on storage unit 301. Operation 404 transfers to device check operation 405. Thus, upon entry to operation 405 a MIME type is specified.

Device type check operation 405 determines whether the request from the user device included a device type. If a device type was obtained in operation 243, processing transfers to XSL check operation 407, and otherwise to set device type operation 406. Set device type operation 406 uses the session identification to retrieve a device type from user device configuration information stored on storage unit 301. Operation 406 transfers to XSL check operation 407. Thus, upon entry to operation 407, a MIME type and a device type are specified.
XSL check operation 407 determines whether the request from the user device specified a specific XSL―stylesheet. If a specific XSL-stylesheet was specified, processing transfers to XSL extension check operation 413 and otherwise to channel command check operation 408.

In this embodiment, two commands, channel and article, result in retrieving data. Accordingly, channel command check operation 408 determines whether the command in the request was a channel command, and if it was, transfers to set channel XSL operation 411, and otherwise transfers to article command check operation 409. Set channel XSL operation 411 sets the XSL―stylesheet to a default channel XSL-stylesheet and transfers to preferred XSL-stylesheet available check operation 415.

When processing transfers to article command check operation 409, article command check operation 409 determines whether the command in the request was an article command, and if it was, transfers to set article XSL operation 412, and otherwise transfers to exception operation 410. Set article XSL operation 412 sets the XSL―stylesheet to a default article XSL-stylesheet and transfers to preferred XSL-stylesheet available check operation 415.

In this embodiment, exception operation 410 throws an exception and terminates the processing of portlet manager 113 for this portlet, because the requested information cannot be transformed for display on the user device. However, in another embodiment, portlet manager 113 may go to the website of a manufacturer of the user device, as identified in the request, or to another appropriate website to download an XSL-stylesheet for the user device. Alternatively, portlet manager 113 may send a query to the user device asking whether the user device has such a stylesheet that can be downloaded.

If the request specified an XSL-stylesheet, check operation 401 transferred to XSL extension check operation 413, which in turn determines whether the specification in the request included an XSL extension (.xsl). If the request included the extension, processing transfers to preferred XSL-stylesheet available check operation 415 and otherwise to set extension operation 414. Set extension operation 414 adds a XSL extension to the requested stylesheet and transfers to preferred XSL-stylesheet available check operation 415. Upon entry to operation 415, a MIME type, a device type and a XSL―stylesheet are specified to that the path to the storage location of the stylesheet can be constructed.

Preferred XSL―stylesheet available check operation 415 opens a folder on storage device 302 for the specified MIME type and then within the specified MIME type folder opens a subfolder for the specified device type. In the specified device type subfolder, operation 415 looks for the specified XSL-stylesheet. If the specified XSL-stylesheet is found, operation 415 transfers to parse and load operation 418, and otherwise transfers to XSL to MIME XSL-stylesheet available check operation 416. Thus, if operation 415 is successful, a device specific XSL-stylesheet has been retrieved.

In MIME XSL-stylesheet available check operation 416, the specified XSL-stylesheet is looked for in the specified MIME type folder, and if the stylesheet is found, processing transfers to parse and load operation 418 and otherwise to exception operation 417. Exception operation 417 also terminates the processing because the XSL-stylesheet is unavailable. Again, in another embodiment, attempts to find a suitable XSL-stylesheet stored at another location could be made prior to throwing the exception. Load and parse operation 418 loads and parses the retrieved stylesheet into a memory for further use by portlet manager 113 and transfers to operation 271 (Fig. 2A).

When the portlet completes the retrieval of the requested data in retrieve data operation 230, convert data operation 271 is initiated. When convert data operation 271 receives both the data and the presentation scheme, portlet manager 113 processes the retrieved data using the stored presentation scheme to generate new data that can be displayed on the user device. For example, if the retrieved information is a XML document, the XSL-stylesheet loaded in memory is used to do the transformation. If the retrieved information is e-mail data, a JAVA class is used to extract the data and insert the data for example into a HTML template.

Convert data operation 271 transfers to return converted data operation 272. In operation 272, portlet manager 113 returns the converted data in a HTTP response to web server 111. Web server 111 sends the HTTP response to the user device that sent the original request.
In display data operation 273, the user device processes the HTTP response, and displays the response to the original request on the user device.

In this example, it was assumed that convert data operation 271 was performed on the same computer running portlet manager 113. However, in another embodiment, retrieve scheme operation 270 and retrieve data operation 230 send the retrieved scheme and retrieved data respectively to another computer system connected to the user device, or the user device itself. In these cases, convert data operation 271 is performed on the another computer system, or the user device, and returned converted data operation 272 is performed only if operation 271 was executed on other than the user device.

In the above embodiment, it was assumed that portlet manager 113 was able to identify the type of presentation requirements for the requesting user device and retrieve a presentation scheme that converted the type of the requested data to a type that could be displayed on the user device. In another embodiment, a presentation scheme is not available to convert the retrieved data to a type of data that can be displayed on the user device. For example, the user requests a spreadsheet that is a data format specified by the manufacturer of the application that generated the spreadsheet. The presentation scheme available for the user device requires an input document in XML. Since the retrieved document in not in XML, the presentation scheme is not useful.

However, in this situation, portlet manager 113 issues a translation request to a filter server 315. In one embodiment, portlet manager 113 sends a request that includes the MIME type required as input to the presentation scheme for the user device, and an address of the requested document to filter server 315. This address can be to a memory where the document is stored after being retrieved by a portlet, or a URL to location of the document on the network. The only requirement is that filter server 315 is able to access the requested document.
In response to the request filter server 315 builds a filter that can read the requested document, dynamically convert the read data using a partial filter adapter chain to the new format, and then write the converted data in the new format so that the data can be supplied to presentation manager 113. More specifically, in response to the request from presentation manager 113, filter server 315 via a conversion service 310, in one embodiment, causes a protocol reader to be instantiated and uses the protocol reader to access the requested document to determine the format of the requested data, i.e., the source document data format. With the source document data format and the target document data format, i.e., the MIME type received in the original request, filter server 315 builds a filter for converting the format of source document to the format of the target document.

In the embodiment of Figure 3, filter server 315 passes the request to a conversion service 310 that in turn accesses a filter registry 311 to generate a filter map of partial filter adapters that can be chained together to convert the format of the requested document to the MIME type specified in the request. Using the filter map, conversion service 310 calls a service to instantiate each partial filter adapter in the map using partial filter adapter library 312. Conversion service 310 calls another service to chain the partial filter adapters together using a chaining application programming interface of each partial filter adapter.

In this embodiment, filter server 315 via conversion service 310 constructs a data filter by gluing a protocol read and parser unit to an input end of the partial filter adapter chain and a bit stream printer and protocol writer to an output end of the chain. After construction of the data filter, conversion service 310 uses the data filter to process the requested document, e.g., the spreadsheet. The data filter generates data with a MIME type that can be input to the presentation scheme that is returned to presentation manager 113, which in turn processes the data as described above.

One important aspect of filter server 315 is that each partial filter adapter utilizes the same generic format independent interface to input the converted data. This allows any one partial filter adapter to be connected to another partial filter adapter without concern for the particular format of the data output by the first partial filter adapter.
In one embodiment, the data filter is used dynamically, which means that the complete data file is not stored in the intermediate formats. Rather, the output from a first partial filter adapter is input to a second partial filter adapter before all the data has been processed by the first partial filter adapter.

A more complete description of filter server 315, and each of the components therein is provided in the European Patent Application commonly filed on the same day as the present application and commonly assigned to the applicant, entitled " A METHOD AND STRUCTURE FOR DYNAMIC CONVERSION OF DATA, of inventors Ralf Hofmann and Michael Hönnig, which is incorporated herein by reference in it entirety. In another embodiment, filter server 315 provides information about the dynamic filter to portlet manager 113, and portlet manager 113 stores a new presentation scheme on unit 302 that includes the dynamic filter generated by filter server 315, or at least a handle to the dynamic filter, and the retrieved presentation scheme.

While in Figure 3 filter server 315 is illustrated as being included within presentation manager server system 100, this is illustrative only. Filter server 315 can be in another computer system, part of a portal, or even on the user device. Portlet manager 113 is coupled to filter server 315 to send and receive the information described above.

In one embodiment, the URL in the request from the user device is of the form:
http://<server>:<port>/portlet/<command sting> ?<parameters>

In this embodiment, the command strings are: load; channel; article; and save. Command load loads information about the requested data. With command save, the user device submits settings made by the user that are to be saved along with the user data. To provide the content of a portlet to a user device, command channel is submitted. Command article is submitted to retrieve an article of a portlet.

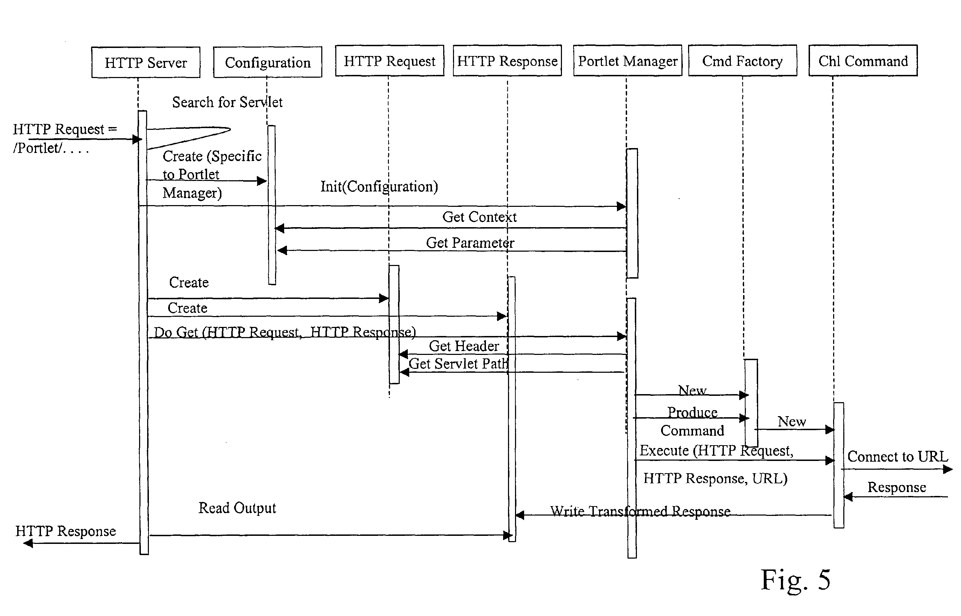

Figure 5 is sequence diagram for one embodiment of portlet manager 113. Along the horizontal axis are individual objects, where each object is represented as a labeled rectangle. The vertical axis represents the passage of time from top to bottom of the page. Horizontal lines represent the passing of messages between objects. A dashed line extends down from each rectangle, and a rectangle along the dashed line represents the lifetime of the object.

When web server 111 receives a URL that specifies a portlet, web server 111 searches for the servlet that is portlet manager 113. If portlet manager 113 has not been loaded, web server 111 first creates a configuration object specific to portlet manager 113, and then calls a portlet manager initialization method with the configuration object as an input.

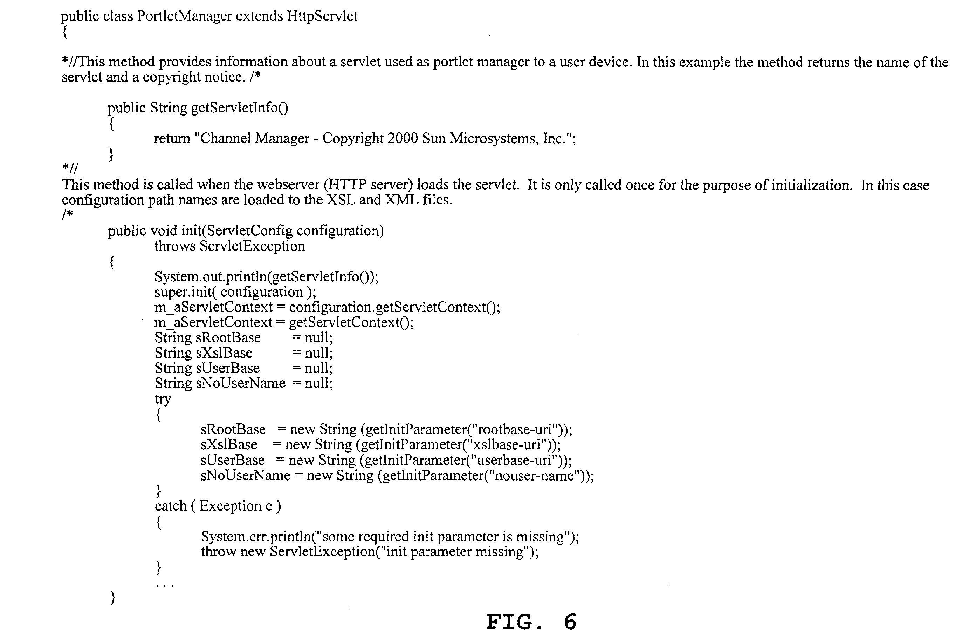

After portlet manager 113 is initialized, portlet manager 113 first issues a get context message to the configuration object, and then issues a get parameters object message to the configuration object. In the embodiment of Figure 6, the configuration path names are loaded to XSL and XML files. The creation and initialization messages are issued by web server 111 only once for the purpose of initialization. Subsequently, the search for the servlet that is portlet manager 113 finds manager 113.

In this embodiment, HTTP Post and Get requests that are included in the request from the user device are passed to portlet manager 113 from web server 111 each time either request arrives at web server 111 for a portlet for which portlet manager 113 was configured initially. Specifically, when a user requests includes a HTTP Get request, web server 111 creates a HTTP request object for portlet manager 113, and a HTTP response object for portlet manager 113 as illustrated in Figure 5. Web server 111 next calls a method do Get, with the HTTP request object and the HTTP response object as inputs, in portlet manager 113.

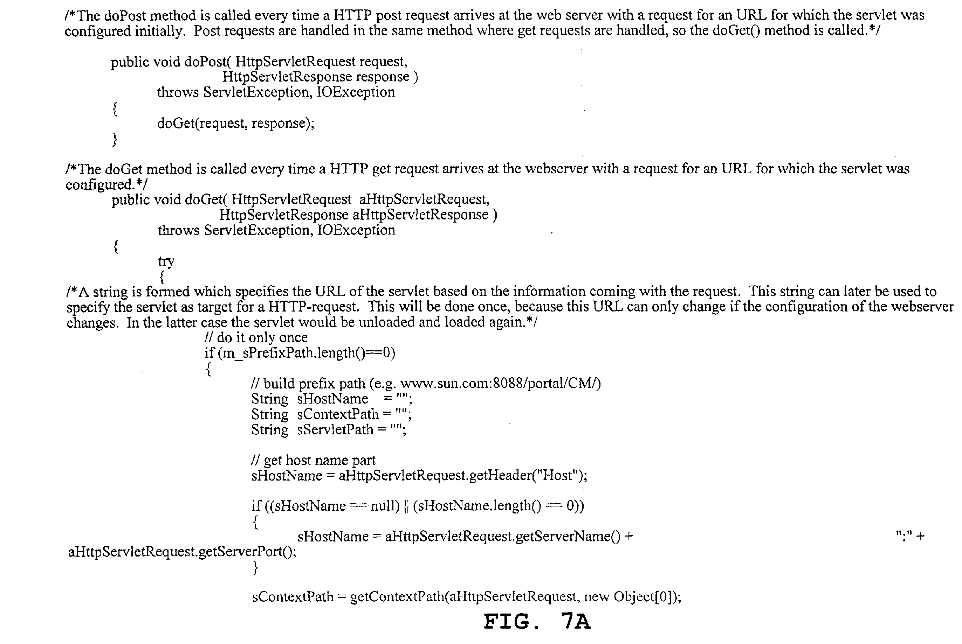

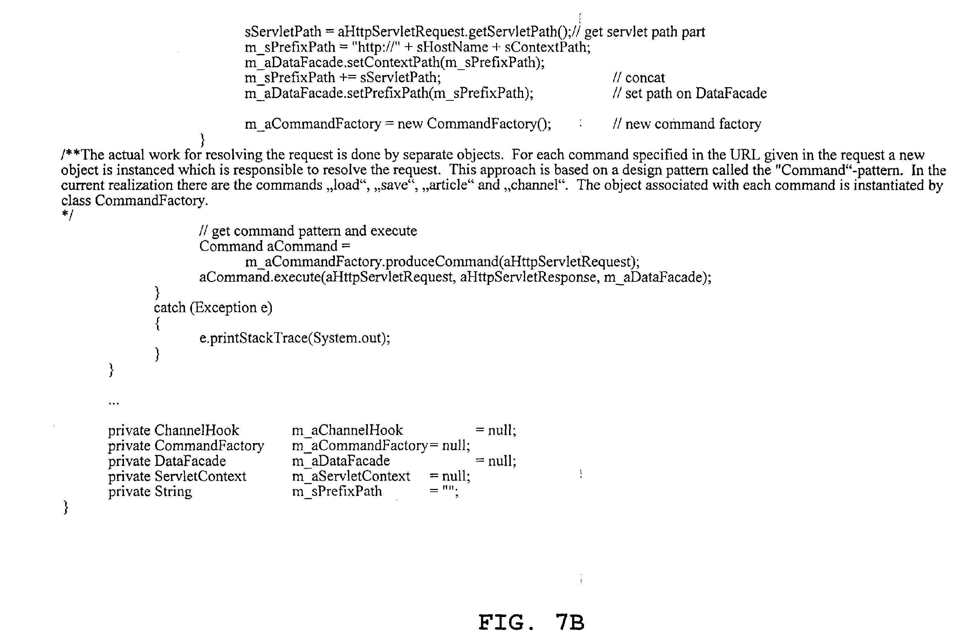

In response to the call to method do Get, portlet manager 113 issued calls to methods get header and get servlet path of the HTTP request object. Portlet manager 113 builds a string that specifies the URL of the portlet based on the information in the request from the user device. See Figures 7A to 7B for one embodiment of HTTP Get and Post commands and method do Get.

Once the URL is built, portlet manager 113 instantiates a new command factory using a class CommandFactory, and then calls a method produce command in the command factory with the HTTP request object as an input. Method produce command extracts the command string from the URL as given above and instantiates a channel command object when the command string is either channel or article; a load command object when the command string is load; and a save command object when the command string is save. The method produce command returns the command object.

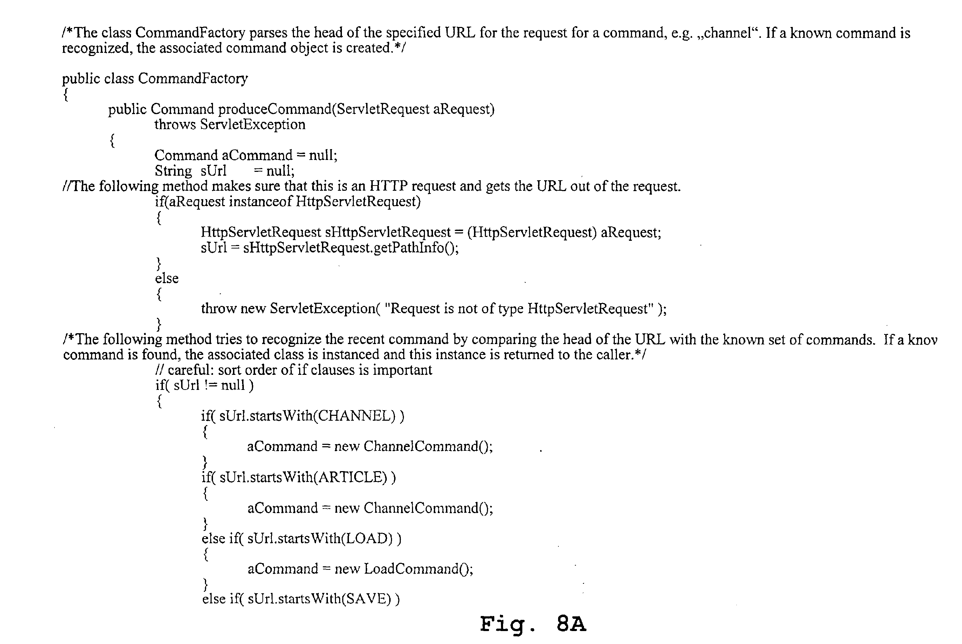

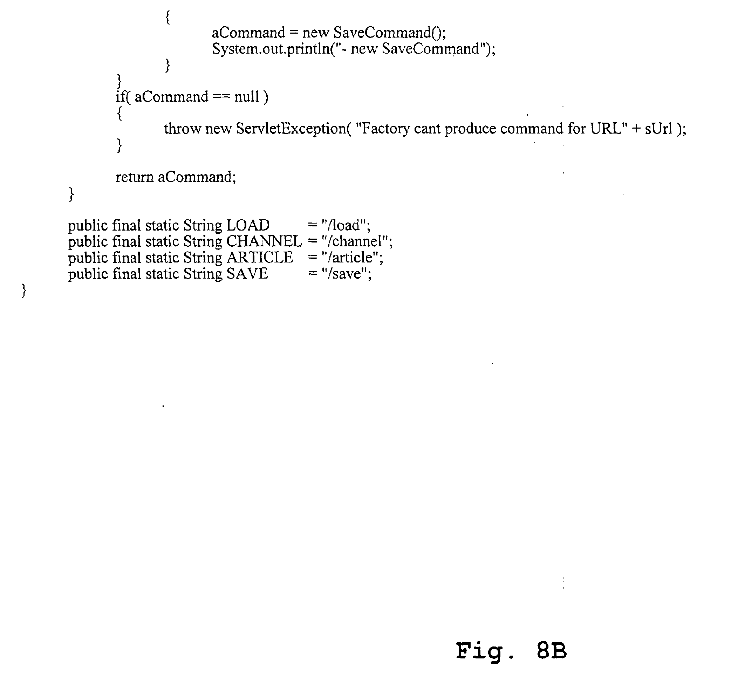

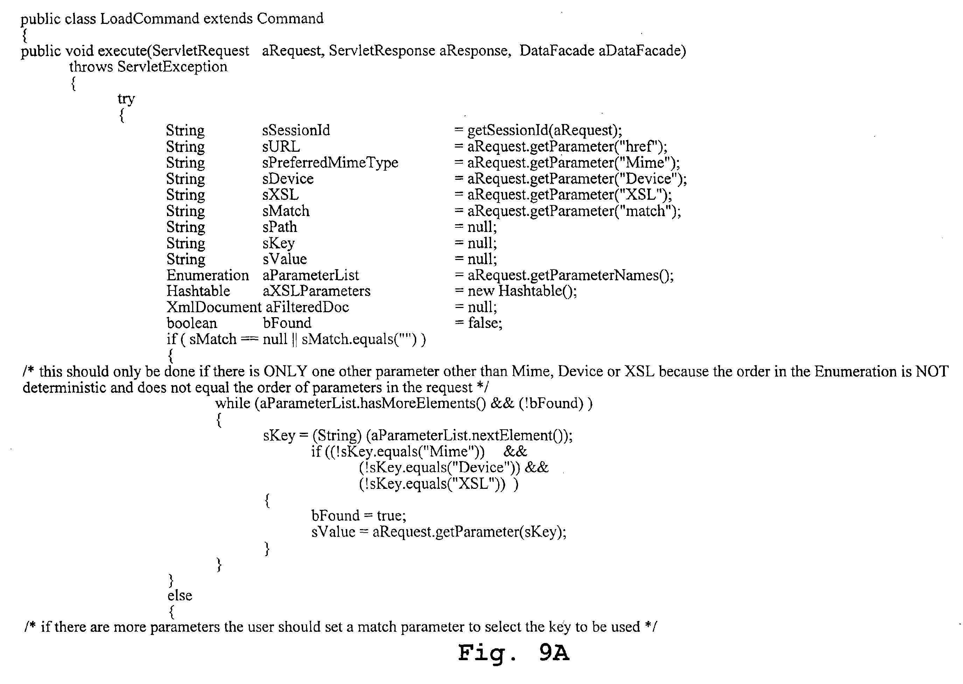

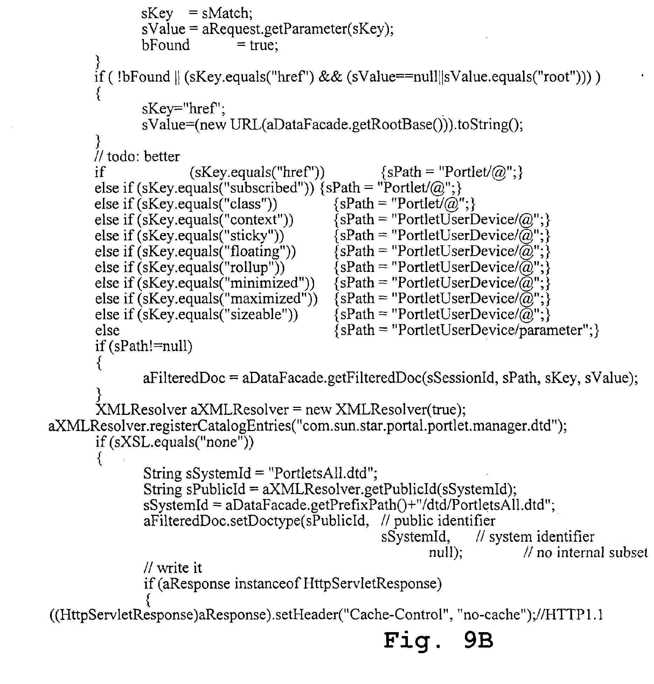

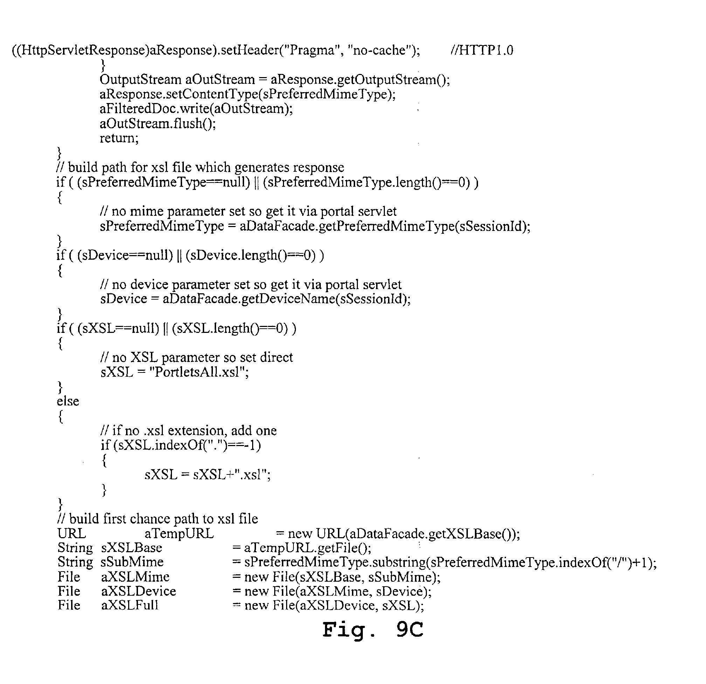

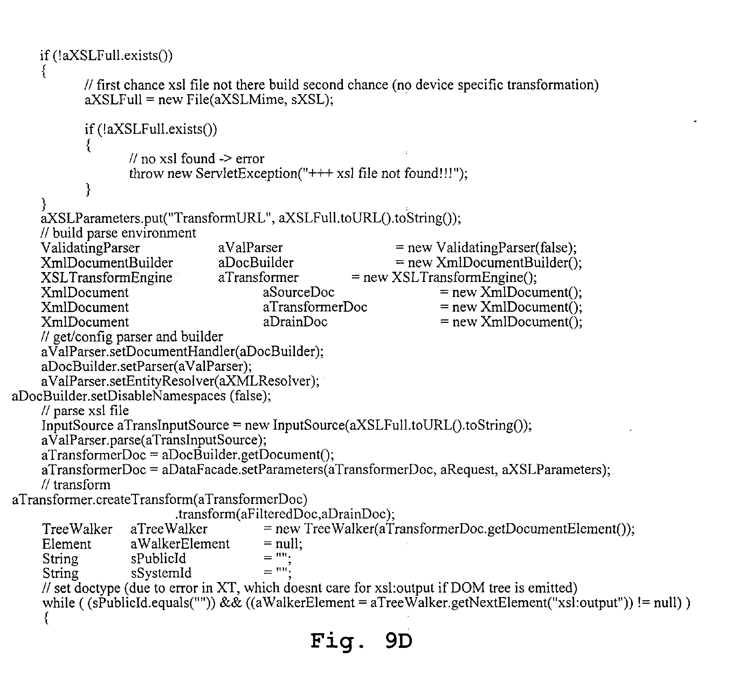

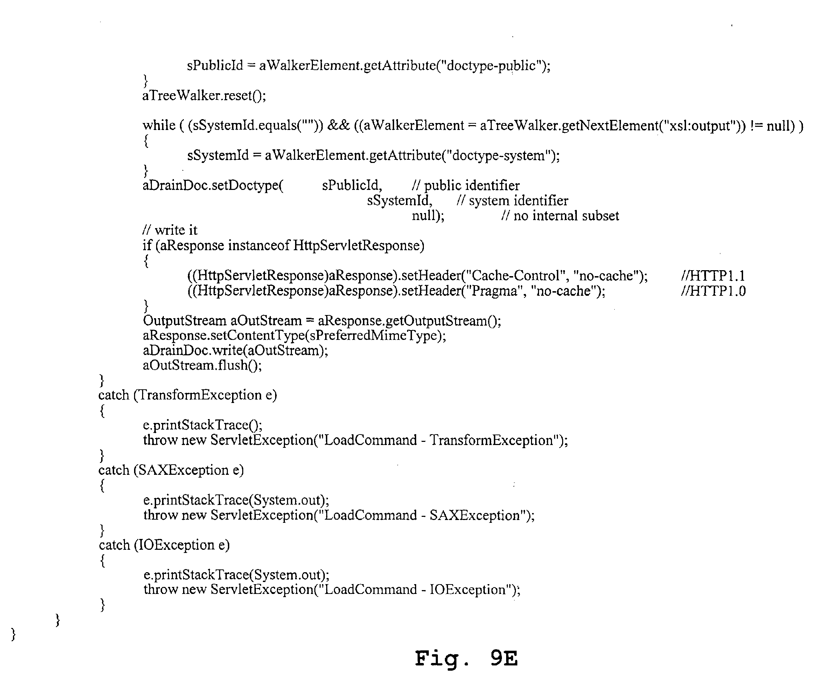

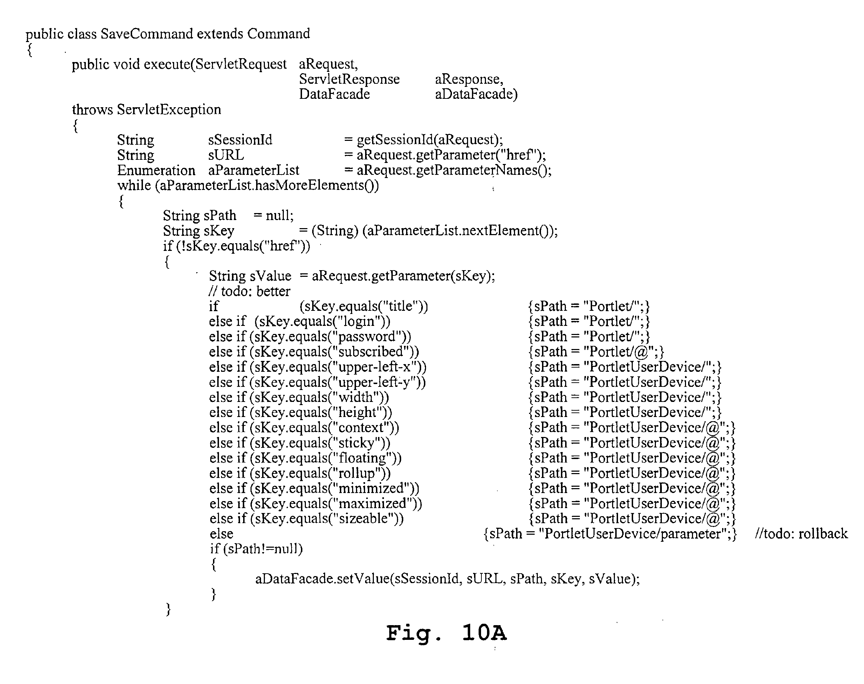

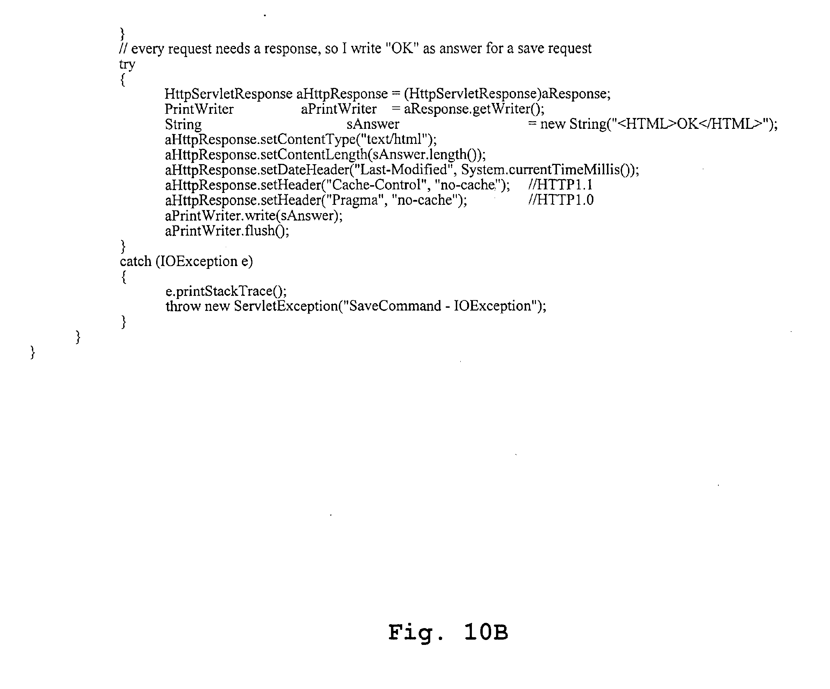

One embodiment of class CommandFactory that includes method producecommand is presented in Figures 8A to 8B. One embodiment of class LoadCommand is presented in Figures 9A to 9E. An embodiment of class SaveCommand is presented in Figures 10A to 10B.

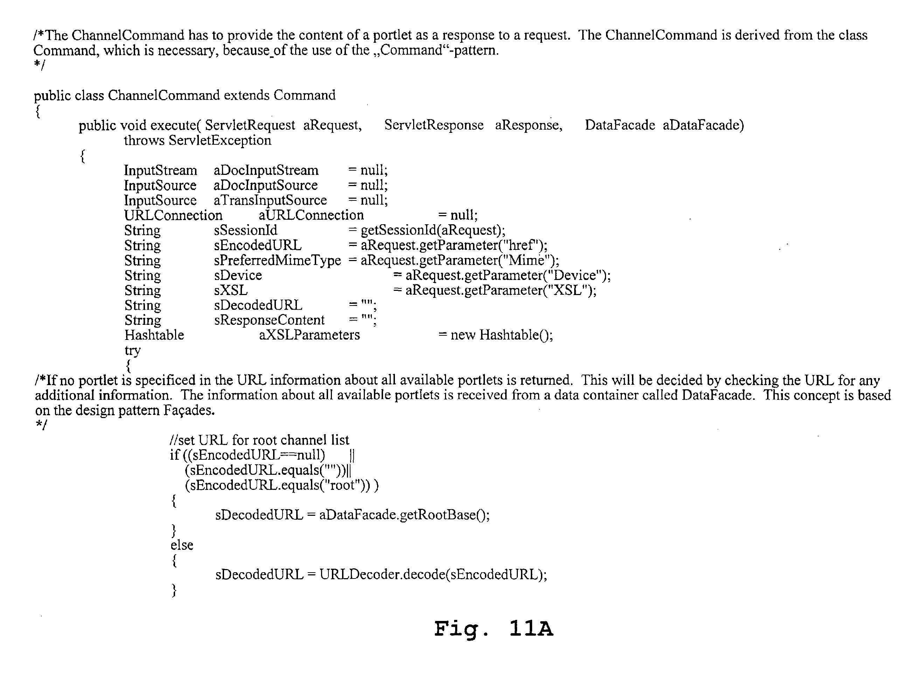

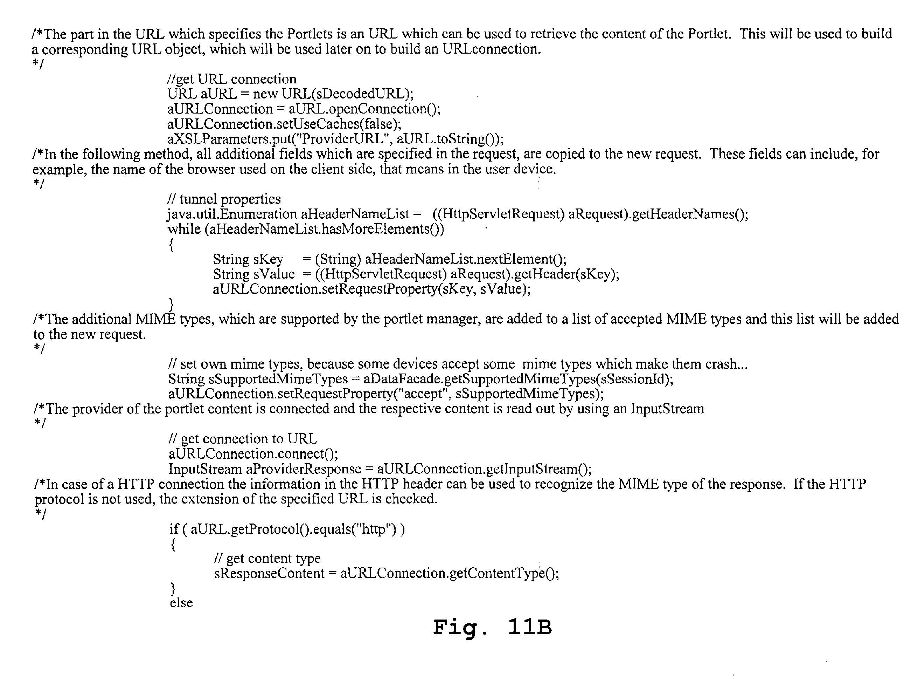

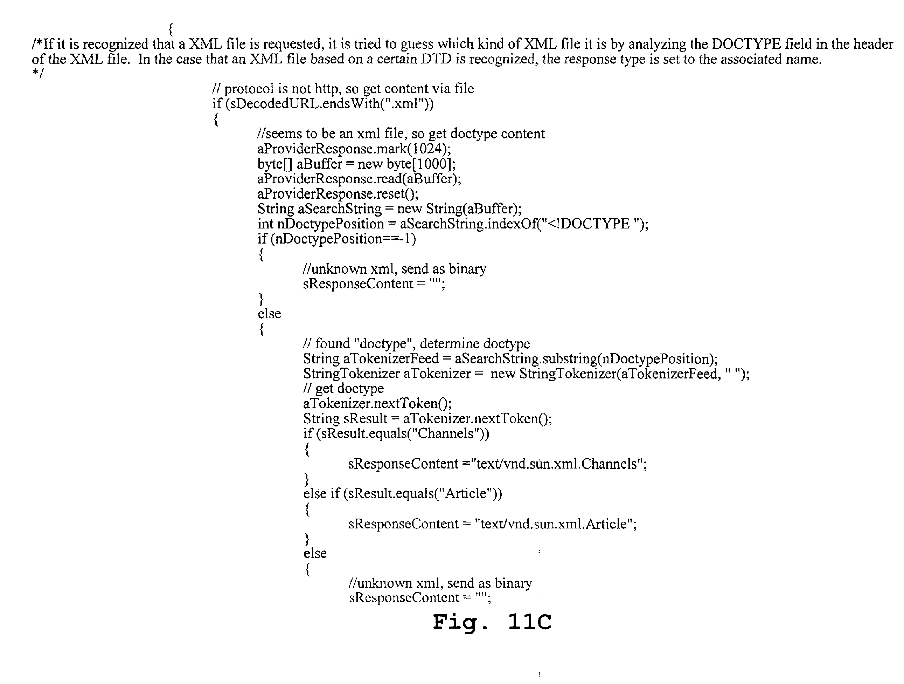

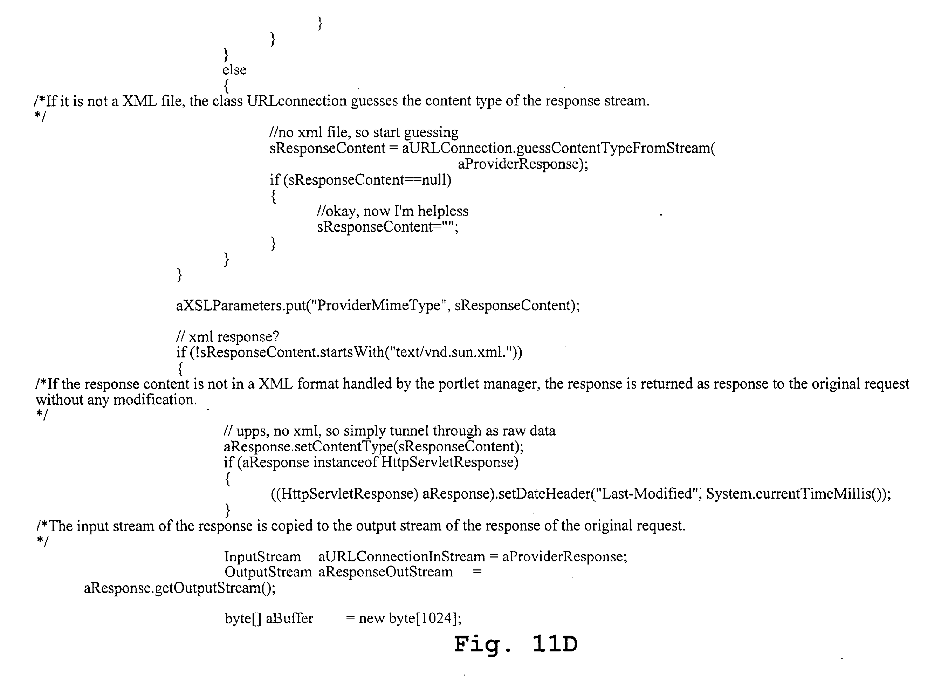

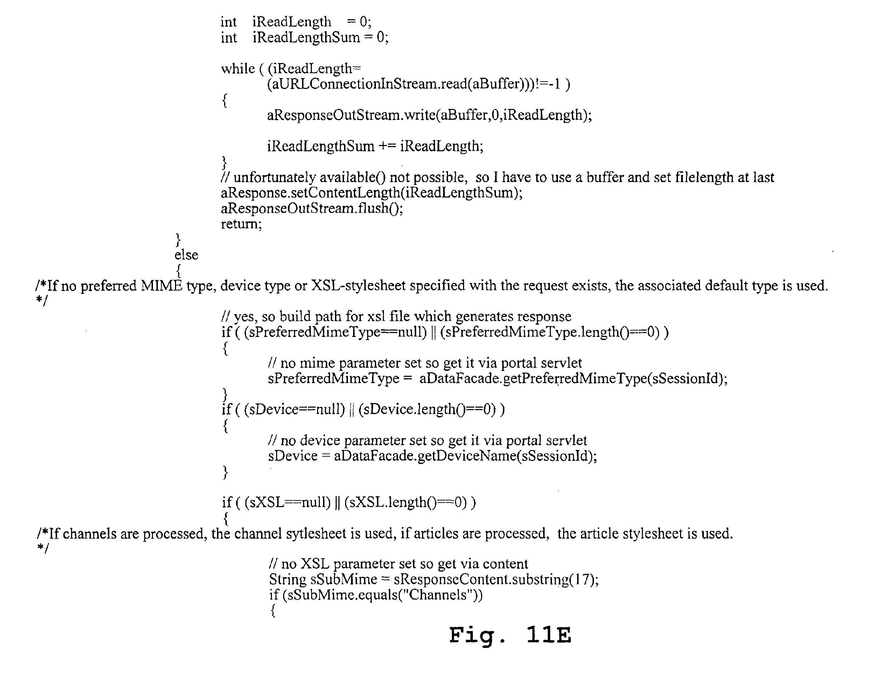

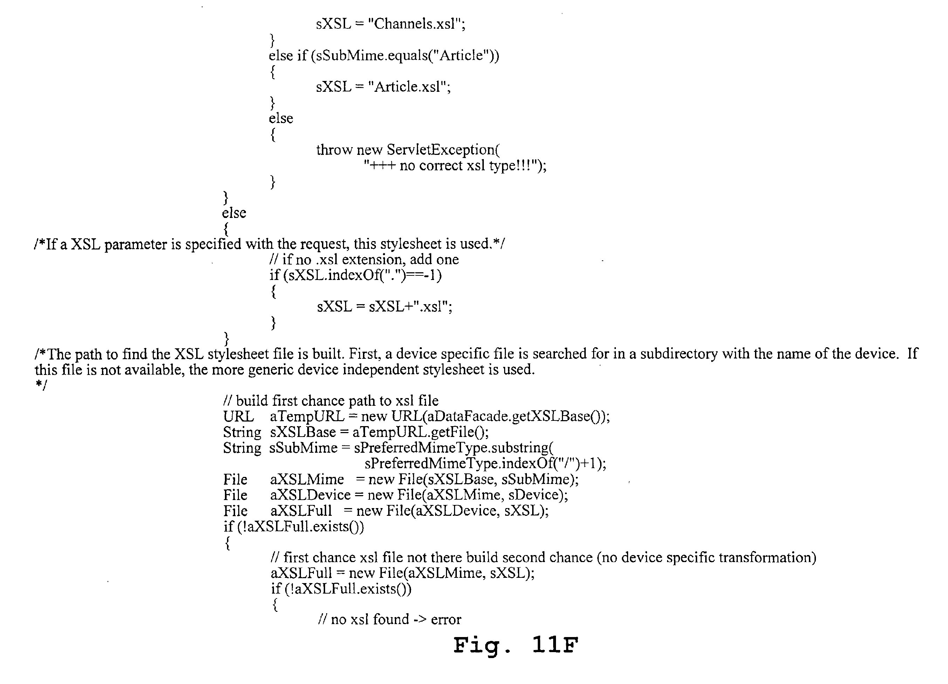

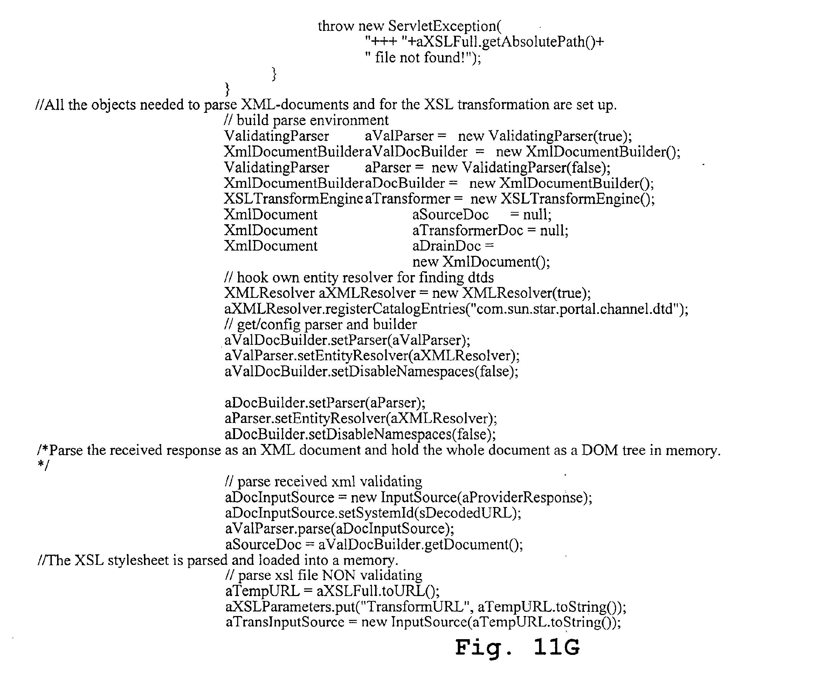

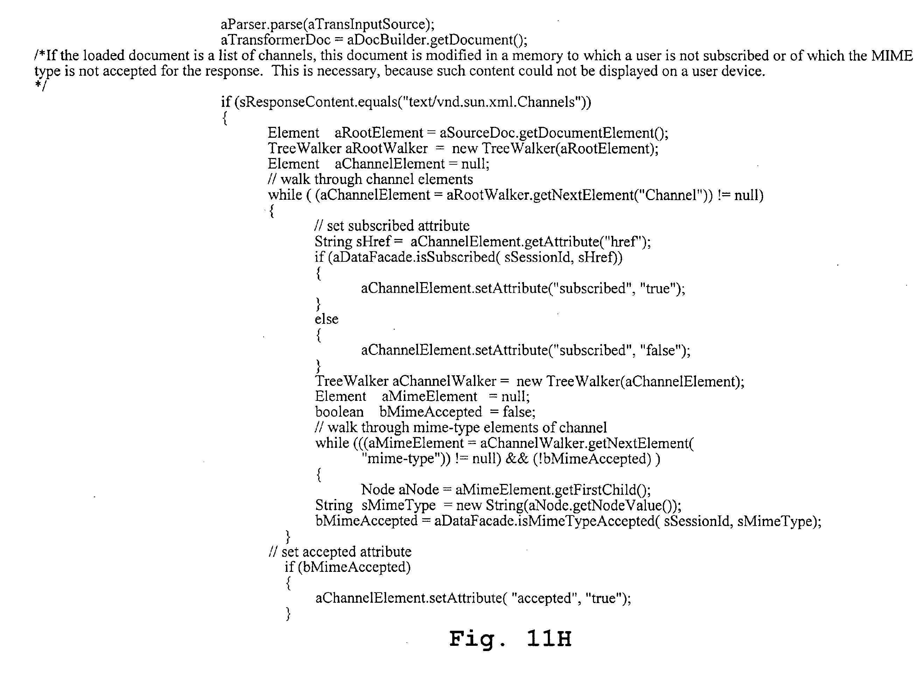

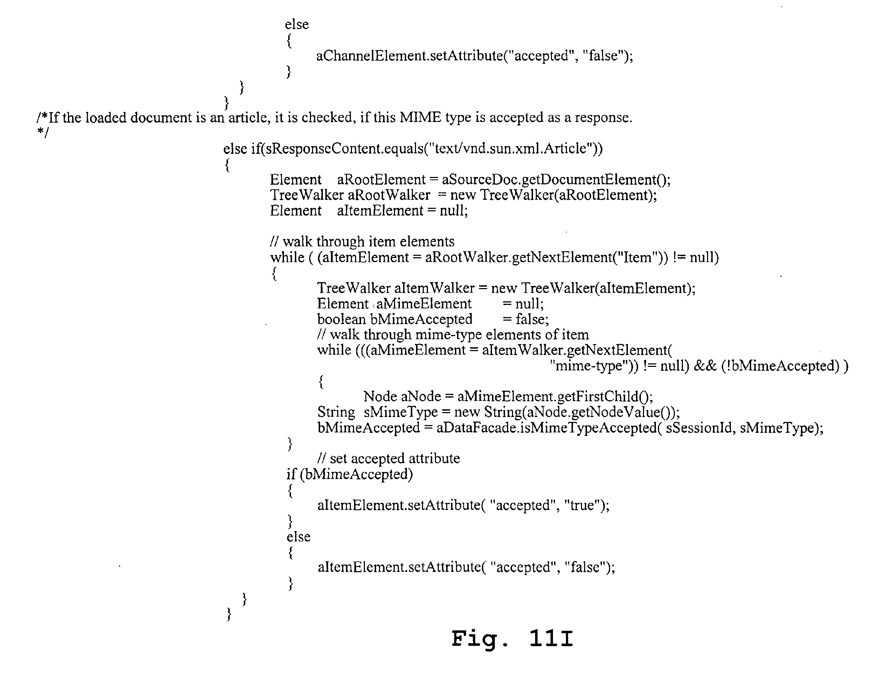

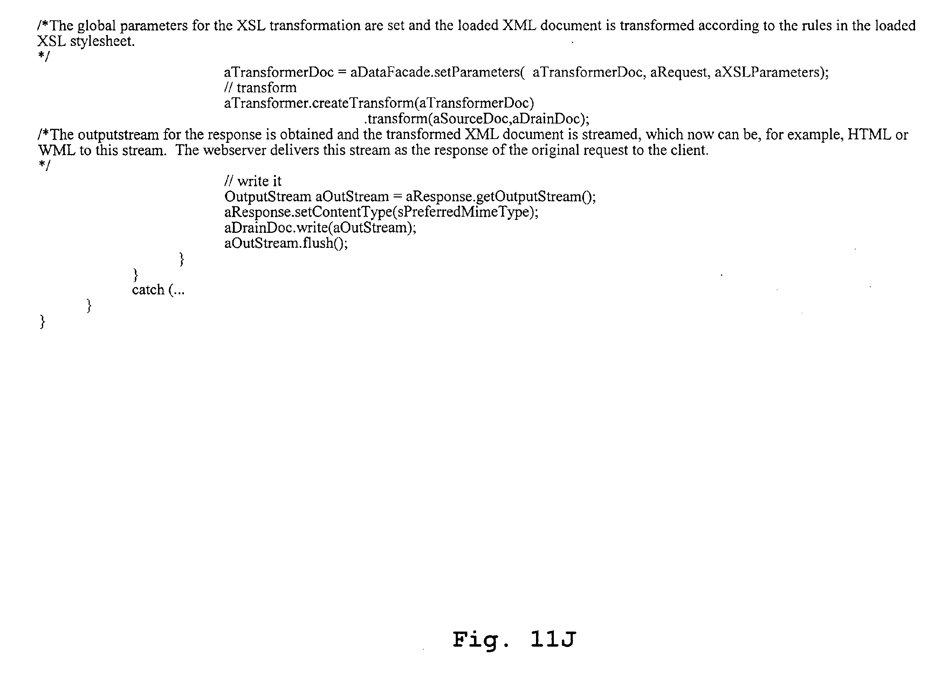

In the following discussion, it is assumed that the request issued by the user device included command article or command channel and so the channel command object was created. In this case, portlet manager 113 in method do Get calls method execute in the channel command object with inputs of the HTTP request object, the HTTP response object and the URL. Figures 11A to 11J are one embodiment of class ChannelCommand that includes method execute.

In method execute, the URL that is input is checked to determine whether a portlet is specified. If the URL does not specify a portlet, an URL container is accessed and information about all available portlets is obtained from the URL container. If a portlet is specified, the part of the URL that specifies the portlet is used to build a URL object that in turn is used to make a connection to retrieve the requested content.

After the URL object is created, all fields in the HTTP request object are copied to the new request that actually is sent to retrieve the requested content. These fields can include, for example, the name of the browser in the user device. The MIME types in the original request as well as the MIME types supported by portlet manager 113 are included in the new request. Upon completion of the new request, method execute uses the URL object to make a connection and to retrieve the requested content.

If the connection uses the HTTP protocol, information in the HTTP header can be used to recognize the MIME type of the response content. IF the protocol is not HTTP, the extension of the URL is check to determine the type of the response content. If the extension of the URL is .xml, a guess is made of what type of XML file is requested by analyzing a field DOCTYPE in the header of the XML file. In the case that a XML file based on a certain document type definition is recognized, the response type is set to the name associated with the document type definition. If the response is not an XML file, the URL connection object guesses the content type of the response content. This is done by a JAVA URLConnnection object that is part of the JAVA runtime environment, which is incorporated herein by reference to show the level of skill in the art.

In this embodiment, if the response content type is other than an XML format supported by portlet manager 113, the retrieved content without any modification is returned as the response to the request from the user device. In the embodiment of Figure 2B, this does not occur, because the user device would not have access to such a portlet.

If the request was a HTTP request, and no preferred MIME type was specified, the preferred MIME type associated with the user is used. If the request failed to specify a device type, the device type associated with the user is used. If the request was for a XML file, and the XML parameter that specified the stylesheet in the original request was not used, a channel XSL―stylesheet is used if the command in the original request was command channel, an article XSL style sheet is used if the command in the original command was command article. If the original request specified an XSL-stylesheet, this stylesheet is used. (See Fig. 4.)

A path to the appropriate XSL―stylesheet is built by method execute using the specified MIME type, device type and XSL-stylesheet. If a user device specific XSL―stylesheet cannot be found at this location, a generic device independent stylesheet is used based upon the specified MIME type. In this embodiment, there is a XSL-stylesheet for mapping each source MIME type to each user device MIME type. Thus, for a portlet with two possible MIME types and a user device that supports two possible MIME types, four XSL-stylesheets are needed.

With the specification of the XSL―stylesheet and the XML content, all the objects needed for the XSL transformation are set. The received content is parsed as an XML document and the whole document is held as a Document Object Model tree in memory. The XSL―stylesheet is parsed and loaded into memory.

If the loaded document is a lists of portlets because no portlet was specified in the original URL, or has a MIME type that is not accepted by the user device, the document is modified in a memory to which the user is not subscribed. This is necessary, because such content could not be displayed on the user device.

If the loaded document is an article, it is checked whether this MIME type is accepted as a response by the user device. Next, the global parameters for the XSL transformation are set, and the loaded XML document is transformed according to the rules in the XSL―stylesheet. The output of the transform is streamed to the HTTP response object.

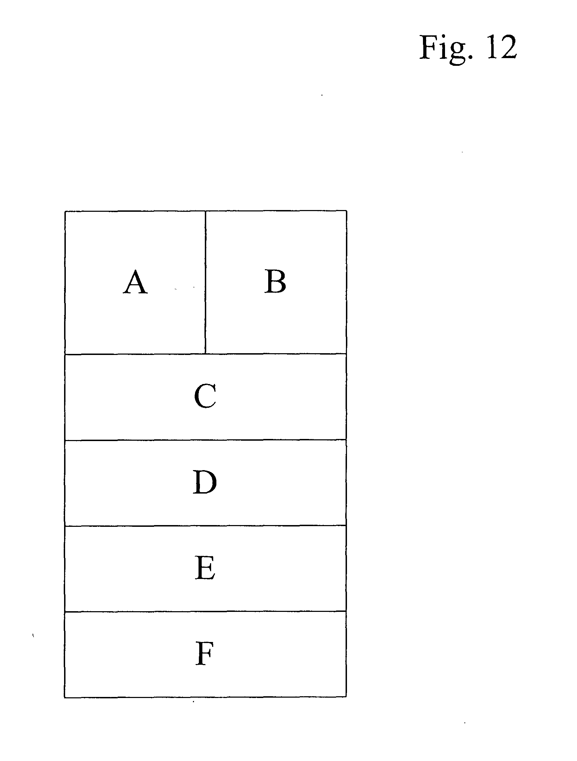

Figure 12 shows an example of a portlet manager 113 according to the present invention as described above. Portlet manager 113 comprises, in this example, six modules. Module A is a receiving module for receiving a request of the user device. Module B is an identifying module for identifying the presentation requirements of the user device. These two modules are able to communicate with the selecting module C to enable module C to select a presentation scheme for the requested data in accordance with the presentation requirements of the user device

In the present example, portlet manager 113 comprises also a retrieving module D for retrieving the requested data. Applying module E applies the presentation scheme selected by module C to the data to create presentable data, which may be presented by the user device. This presentable data is submitted by a transmitting module E to the user device. Modules D, E and F need not be part of portlet manager 113. Modules D, E and F or some of them may also reside on the user device or on a computer system connected to the user device.

In view of this disclosure, various alternative embodiments will be apparent to those of skill in the art. For example, in the above embodiment, data was retrieved by presentation manager 113, and presentation manager 113 applied the selected presentation scheme to the data. In another embodiment of the present invention, the data may be retrieved by the user device itself. Then, the selected presentation scheme may be applied by the user device or by the presentation manager. The latter, for example, would apply if the data retrieved by the user device were transferred to presentation manager 113 for applying the selected presentation scheme and then re-transferred to the user device.

Those skilled in the art will readily understand that the operations and actions described herein represent actions performed by a CPU of a computer in accordance with computer instructions provided by a computer program.

Therefore, presentation manager 113 and any associated portlets may be implemented by a computer program causing the CPU of the computer to carry out instructions representing the individual operations or actions as described above. The computer instructions can also be stored on a computer-readable medium, or they can be embodied in any computer-readable medium such as any communications link, like a transmission link to a LAN, a link to the Internet, or the like.

Thus, presentation manager 113, portlets, or any combination of the two, can be implemented by a computer program comprising computer program code or application code. This application code or computer program code may be embodied in any form of a computer program product. A computer program product comprises a medium configured to store or transport this computer-readable code, or in which this computer-readable code may be embedded. Some examples of computer program products are CD-ROM discs, ROM cards, floppy discs, magnetic tapes, computer hard drives, servers on a network, and carrier waves. The computer program product may also comprise signals, which do not use carrier waves, such as digital signals transmitted over a network (including the Internet) without the use of a carrier wave.

The storage medium including the presentation manager and/or portlets executed on a server may belong to presentation manager server system 100 itself. However, the storage medium also may be removed from presentation manager server system 100. The only requirement is that the program code for these objects is accessible by system 100 so that the computer code can be executed by system 100 in the embodiment of Figure 1A.

Herein, a computer memory refers to a volatile memory, a non-volatile memory, or a combination of the two in any one of these devices. Similarly, a computer input unit and a display unit refer to the features providing the required functionality to input the information described herein, and to display the information described herein, respectively, in any one of the aforementioned or equivalent devices.

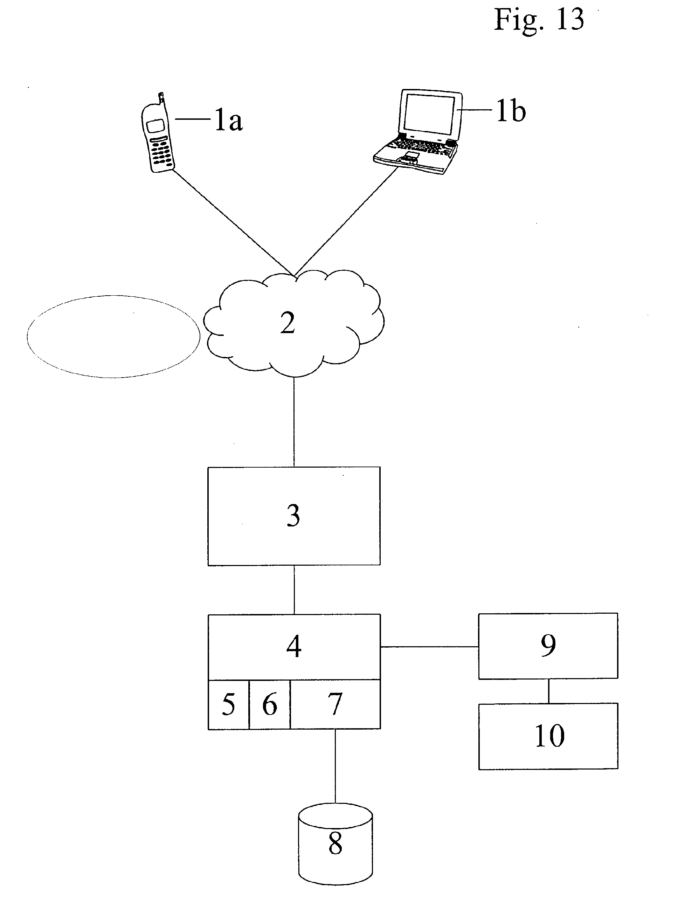

Fig. 13 shows another example of a system and method according to the present invention. A user device like a mobile phone la or a laptop computer 1b may want to access certain data via the network 2. This network 2 may be the Internet or any other permanent or temporary network, for example a local area network. Other user devices are suitable as well in the scope of the present invention. Examples include any kind of computer systems, like servers and personal computers, and any devices which are able to process data and to communicate with other devices for exchanging data. In this context computer systems may include at least a processor, a storage medium and an i-/o-interface. In the context of the present invention data refers to any type of information which is arranged in certain order to be accessible by a computer system. The data to be accessed may also include one or more functions or functionalities provided to the user of a user device. Functions are, in this context, possibilities given to the user device to initiate any actions beyond the mere retrieval or display of information, for example, a search in the internet for a certain publication or the initialization of a software program on a remote server carrying out some operations in response to the user device's request.

If the user device la or 1b wants to access certain data via the network 2, it will send a request for said data, for example, for a certain homepage, to a webserver 3. The webserver 3 comprises a processor, a memory and an i-/o-interface. In particular, the webserver 3 includes means for receiving this request. The request may specify the data requested from the mobile phone la or the laptop 1b by giving suitable address data as to where this data can be found, for example, the Internet address of a homepage (URL).

This request will be forwarded to data presentation management means, in the following exemplary referred to as portlet manager 4. This portlet manager 4 may be implemented in software within the webserver 3 or may be installed on a separate computer system which is connected or connectable to the webserver 3. Having received the request for data from the webserver 3 the portlet manager 4 identifies the presentation requirements of the user device having sent the request for the data with respect to the presentation of the data to this user device. For this purpose the user device has means for identifying these requirements. These presentation requirements may be any conditions or limitations for the presentation of data on the user device, for example, kind and size of display for data on the user device, type of programming language or data format supported by the user device, or any other presentation requirements of the user device, for example, of the processor or the memory. These presentation requirements may not only result from technical necessities, but also from an individual user's demands or wishes. The presentation requirements of the specific user device are identified by the respective means either by being provided the information about the presentation requirements directly from the user device, together with the request for the data or separately, or by being provided information about the type of the user device and by procuring the needed information about the presentation requirements of the so identified user device from a data base, which may or may not be an integral part of the portlet manager, and which connects information about the type of the user device with the desired information about the specific presentation requirements of the user device with respect to the presentation of the requested data.

In order for the data to comply with the identified requirements the portlet manager 4 loads all configuration information needed for presenting the requested data to the user device la or 1b, respectively. Configuration information is all information about the layout and the presentation of the requested data. It must correspond to the identified requirements. The totality of the configuration information needed to present data to a certain user device is referred to as a presentation scheme. This is selected according to the presentation requirements of a certain user device by the data presentation management means, i.e. the portlet manager 4. For this purpose, XSL-stylesheets, which may be stored in storage medium 5 may be selected according to the identified requirements by means 7 for presenting data in accordance with the identified presentation requirements of the user device 1 a. These means 7 are generally implemented in software. They may, for example, have access to a further external storage medium 8 on which, for example, XSL-stylesheets may be stored. The configuration data loaded in response to the user device's request may be stored in a specific file until the data to which it shall be applied has been provided.

The portlet manager 4 now retrieves the requested data. The data is procured via the webserver 3 from portlets 9, 10, ... . Portlets 9, 10, ... represent ways for accessing the requested data. This data may have different format. For example, text based information may be provided in the HTML format as well as in the WML format. The portlets 9, 10, ... have means for accessing data, including software modules, to retrieve the requested data for the portlet manager 4 from any accessible location, including internet homepages, data bases and other storage media.

In the portlet manager 4 the means 7 will then apply the presentation scheme loaded from storage media 5, 6 and 8 to the data. This presentation scheme will be applied to the data. Herewith, the data which was requested by the user device 1a or 1b, respectively, is converted to presentable data which may be presented in accordance with the requirements of the user device la or 1b, respectively.

Finally, the data may be transferred to the user device la, 1b which requested it in the presentation required by this user device 1a, 1b. Herewith, the user device la, 1b may access the requested data in proper form.

Fig. 2 gives an example of a user's view on the present invention by showing a print-out of a screen 20 of a user device, here a laptop, utilizing a method according to the present invention. Screen 20 shows symbols 21, 22, 23, ..., each standing for one portlet - 9, 10, ... in Fig. 13. The symbols 21, 22, 23, ... offered on the screen 20 and the portlets associated therewith can be freely chosen by a user of the user device.

However, a portlet is only selected for display on screen 20, that means the user can only choose it, if its data may be presented by the user device. For example, if the user device does not support graphics, a portlet which defines the MIME type image/jpeg will not be selected for display on the screen 20, that means it will not be offered to the user of the user device. This pre-selection of portlets to be offered to the user is made by a comparison of the requirements of the user device and of the MIME type of data defined by each of the portlets. In the above example relating to graphics the presentation requirements of the user device, the laptop, regarding the presentation of data will not allow to support graphics. The comparison with the MIME type of data defined by the various portlets will show that a portlet defining image/jpeg as its MIME type of data cannot be supported by this user device. Therefore, it will not be displayed on the screen 20. This comparison may be made at any suitable location, for example, in the user device as well as in the webserver, in the portlet manager or in the respective portlet itself.

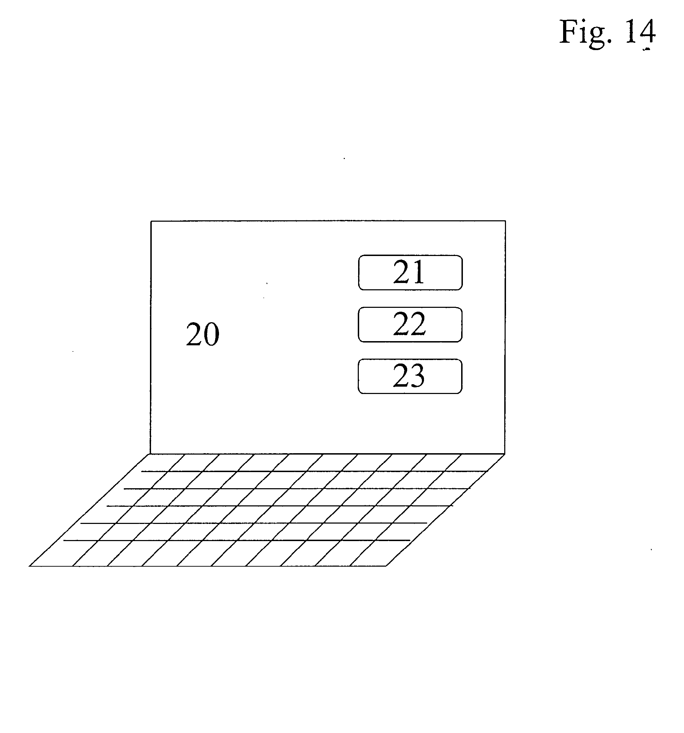

Instead of the screen print-out given in Fig. 14 the portlets may also be offered to the user of the user device in the form of a text based listing. This listing may be put together in the portlet manager, for example, in the XML format. The information required for this listing, namely which portlet defines which mime type of data, may be retrieved via the webserver from the various portlets.

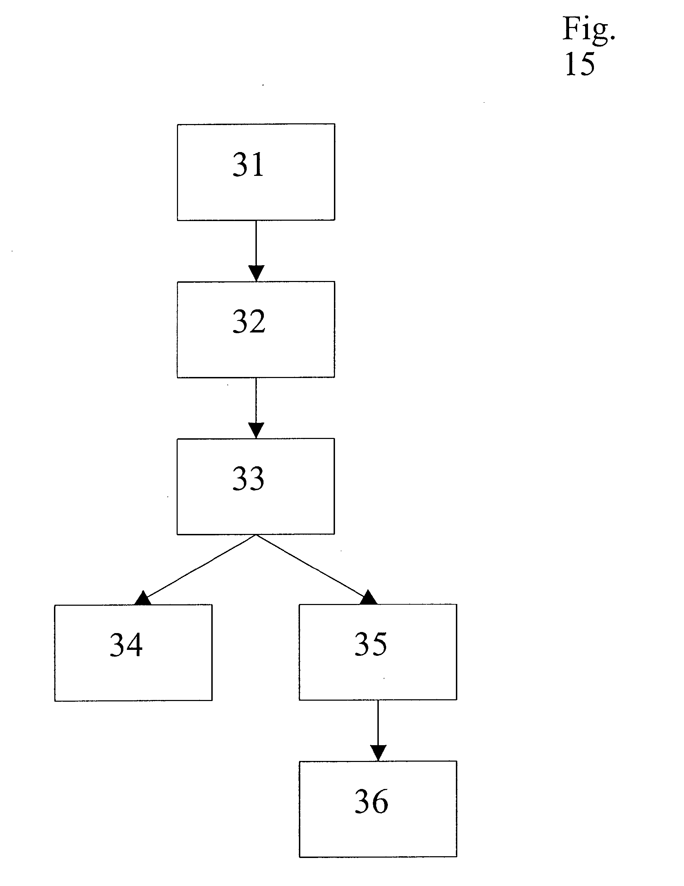

Fig. 15 shows in a flow chart one possible way to fulfill the presentation requirements of the user device la or 1b, respectively. In a first step 31 the user device la, 1b sends a request to the portlet manager 4 via the webserver 3. This request either contains information about the presentation requirements of the requesting user device la, 1b or it contains information about the identity of the user device la, 1b. It further includes a description of the requested data. Such a description may be, for example, the URL of the data, if the requested data can be found on a homepage on the Internet. The portlet manager 4 will contact in step 32 the corresponding portlet for retrieving this data. If the requested data is only available from several different portlets, those would be contacted in this step. In a next step 33 the portlet manager 4 retrieves the data from the one or more portlets. In order to consider the presentation requirements of the user device 1 the portlet manager 4 needs information about these requirements. In one embodiment of the present invention the portlet manager 4 extracts from the request in a further step 34 a list of MIME types supported by the user device 1a, 1b. In another embodiment the portlet manager 4 may have a list of the presentation requirements of different user devices 1a, 1b. In this case, the portlet manager 4 may analyze the identity of the user device 1a, 1b in step 35 and then contact this list in step 36 in order to obtain the information about the requirements of the user device 1a, 1b.

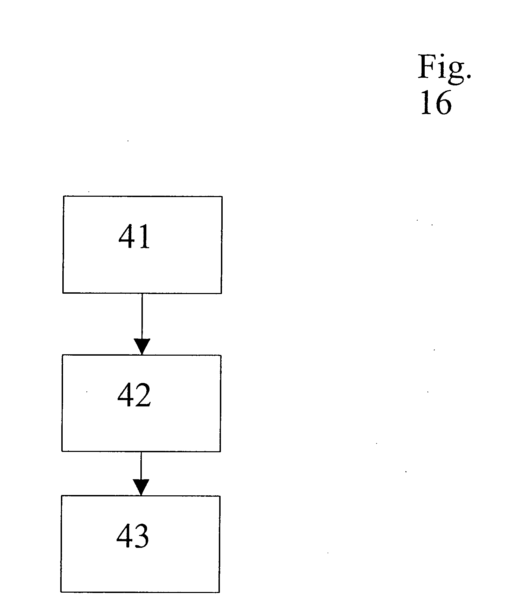

Fig. 16 shows a flow chart representing a method according to the present invention for presenting data on a user device with certain data presentation requirements. In a first step 41 the data presentation management means, i.e. the portlet manager 4 receives a request for data from a user device 1a, 1b. In the next step 42 the portlet manager 4 identifies from this request the presentation requirements of the user device 1a, 1b, as it was above described in relation to Fig. 15. In step 43 a presentation scheme is selected for the requested data in accordance with the identified presentation requirements. This enables the user device 1a, 1b or the portlet manager 4 or another computer system which is able to be connected to the user device 1a, 1b or to the portlet manager 4 to apply the selected presentation scheme to the data delivered by the portlets in order to arrive at presentable data which may be presented to the user device 1a, 1b.

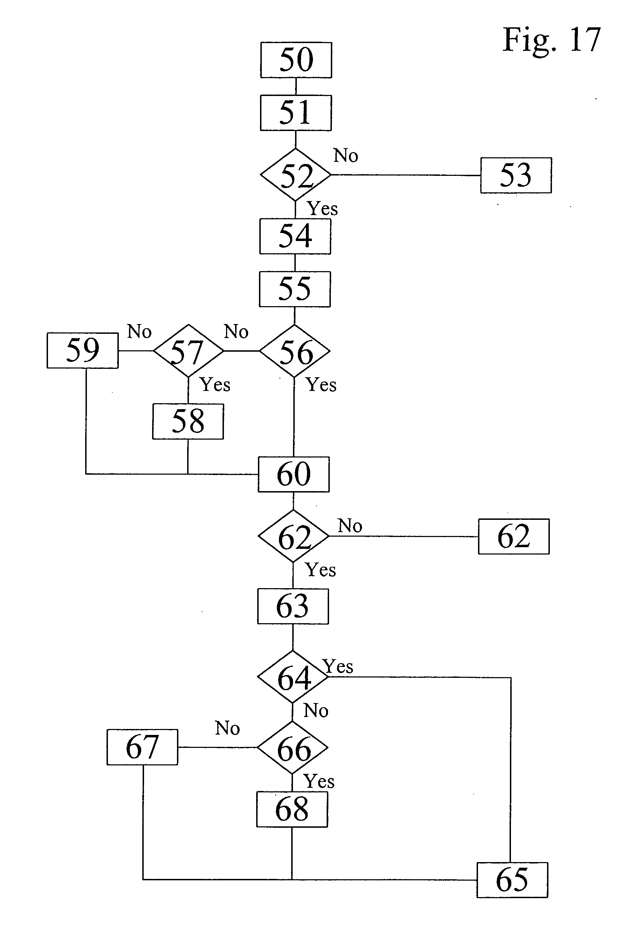

Fig. 17 presents an exemplary embodiment of the method of the present invention. In this example, a setup as presented in and described in connection with Fig. 13 is used. Therefore, reference numerals below 50 refer to devices shown in Fig. 13.

In step 50 the user device, for example, a mobile phone 1a sends a request for data via the network 2 to the webserver 3. The mobile phone 1a uses the wireless application protocol (WAP) as MIME type for data which it handles and processes. A browser may run on the mobile phone 1a. The requested data may be, in this example, a certain homepage which is available on the Internet at a certain URL. This homepage is programmed, for the purposes of this example, in an extensible markup language (XML). The request of the mobile phone 1a includes at least the URL of the requested homepage and the MIME type supported by the mobile phone 1a, i.e. WAP. In this example, the identity of the user device 1a, 1b and its user is transmitted together with or as a part of the request. The request also includes a command, for example, "channel", if the content of the requested URL shall be loaded onto the user device.

In step 51 this request of the mobile phone 1a is analyzed by the webserver 3 in order to decide whether this request has to be processed by the portlet manager 4. The alternative is to provide the data directly by the webserver 3. This decision - made in step 52 - is based on the MIME type used for the requested homepage and the MIME type supported by the mobile phone 1 a.

If the above question would be answered with "NO", then the requested data will be directly provided by the webserver 3 to the mobile phone 1a in step 53. This would require that the MIME type of the requested data and the MIME type supported by the mobile phone 1a are identical or at least compatible. This condition will frequently be fulfilled, for example, if a browser - which is able to handle and process data in XML - requests a homepage - which is also formated in XML.

If the answer to the above question is "YES", the request is forwarded by the webserver 3 to the portlet manager 4 in step 54. The portlet manager 4 may be a servlet. A servlet is an extension to a webserver which provides the webserver with information and logic. If a request for a certain URL, for example, is forwarded to the portlet manager 4, the portlet manager 4 is started. This leads to the portlet manager 4 processing the request. This processing includes doPost requests as well as doGet requests as it is shown in Table 1. In order to simplify the further communication the portlet manager 4 employs the URL mentioned in the request forwarded by the webserver 3 for identifying itself and saves this address in a string. The portlet manager 4 identifies also the requested command. In one embodiment of the present invention there are supported at least the following commands. The "load" command loads information about the requested data. With the "save" command the user device submits settings made by the user device 1a in order to save these settings along with the user data. In order to provide the content of a portlet to a user device the "channel" command is submitted. Since the user device 1a requests in this example data from a portlet the "channel" command will be submitted by the mobile phone 1a. The functionality of the portlet manager 4, especially certain commands, is described in detail in the code shown in Table 1.

In step 55 the identity of the user device 1a and of the user employing the user device 1a is retrieved from the request. Then, in step 56, the portlet manager 4 will access an internal or external storage medium, for example, data base 8 in order to check whether for the identified user device 1a and for the identified user a presentation scheme or parts of a presentation scheme are already stored. For example, a certain user may request a specific character type (font) for the data to be presented on the display of his mobile phone 1a, or a certain mobile phone 1a may request a specific character size (font size) in view of its specific display.

If "NO", that means the storage medium does not have any information about a presentation scheme or a part of a presentation scheme assigned to the specific user or the specific requesting user device 1a, the portlet manager 4 may search in step 57 in the network 2 for such individual presentation schemes or parts thereof. For example, if the network 2 is the Internet the portlet manager 4 may contact the homepage of the producer or distributor of the mobile phone 1a in order to find the desired information there. If the search of the portlet manager 4 is successful, the presentation scheme or part of a presentation scheme will be retrieved in step 58. If the search is not successful, a default presentation scheme will be provided for later application to the requested data in step 59.

If "YES", that means the storage medium has information about a presentation scheme or a part of a presentation scheme assigned to the specific user or the specific requesting user device 1a, the portlet manager 4 loads this presentation scheme or part thereof in step 60.

In step 61, based on the presentation scheme or part thereof retrieved and based on the request of the user device 1a the portlet manager 4 requests from one or more portlets 9, 10, ... the delivery of the requested data, here the homepage with the URL specified in the request of the user device 1a. This request includes a list of all MIME types which are either supported by the user device 1a or which may be converted by the portlet manager 4 into a MIME type which is supported by the user device 1a. Other additional information like, for example, the type of the browser used by the user device 1a may also be included in the request to the portlet. In step 61 the portlet manager 4 asks the portlets 9, 10 ... whether they are able to deliver the requested data in a MIME type listed in the request. In order to submit the request it may be necessary to create a connection to the portlet.

If "NO", that means if the data cannot be delivered by the portlets 9, 10, ... in a MIME type which is supported by the user device 1a or which can be converted by the portlet manager 4 into a MIME type supported by the user device 1a, an error message is created in step 62, which is sent to the mobile phone 1a in order to report that the request for data sent in step 50 to the webserver 3 cannot be fulfilled.

If "YES", that means if the data can be delivered by the portlets 9, 10, ... in a MIME type which is supported by the user device 1a or which can be converted by the portlet manager 4 into a MIME type supported by the user device 1a, the data are received by the portlet manager 4 in step 63. In step 64 the MIME type of the received data is analyzed as to whether the user device 1a supports it or conversion by the portlet manager 4 is necessary.

If no conversion is necessary, the requested data are transferred to the user device 1a directly via the webserver 3 and the network 2 in step 65. If, however, conversion is required, what will be the case in our example where the homepage is in XML and the mobile phone 1a supports only WAP, the retrieved data will be analyzed in step 66 as to whether it is present in an extended markup language (XML).

If "NO", that means if the requested data is not in XML, the data will be converted in step 67 into the requested MIME type to arrive at presentable data by applying the corresponding presentation scheme, which includes conversion modules for the conversion of data between the respective MIME types. If, for example, the requested data would be supplied in HTML, this data would be converted from HTML to WAP in step 67. Subsequently, the created presentable data is sent to the user device 1a in step 65.

If "YES", that means the data is in XML - like in the here chosen example - the portlet manager 4 will select the suitable presentation scheme. For XML data this presentation scheme may include a XSL stylesheet. If a user device specific presentation scheme is accessible, the portlet manager 4 will choose this.

The requested data will then be subjected in step 68 to the application of the presentation scheme, in this example, to the selected XSL stylesheet. The presentation scheme may be retrieved by portlet manager 4 from storage medium 5. Herewith, the presentation scheme - here: the XSL stylesheet - is applied to the data so that presentable data is created. This presentable data may be sent to the user device 1a in step 65.

Fig. 12 shows an example of a portlet manager 4 according to the present invention. The portlet manager 4 comprises in this example six modules. Module A is a receiving module for receiving a request of the user device 1a, 1b. Module B is an identifying module for identifying the presentation requirements of the user device 1a, 1b. These two modules are able to communicate with the selecting module C in order to enable module C to select a presentation scheme for the requested data in accordance with the presentation requirements of the user device 1a, 1b.

In the present example, the portlet manager 4 comprises also a retrieving module D for retrieving the requested data to the portlet manager 4. The applying module E will then apply the presentation scheme selected in module C to the data to create presentable data which may be presented by the user device. This presentable data will be submitted by a transmitting module E to the user device. The modules D, E and F need not be part of the portlet manager 4. They or some of them may also reside on the user device 1a, 1b or on a computer system connected to the user device 1a, 1b or to the portlet manager 4.

It will be understood that the present invention is not limited to the examples given and explained in detail.

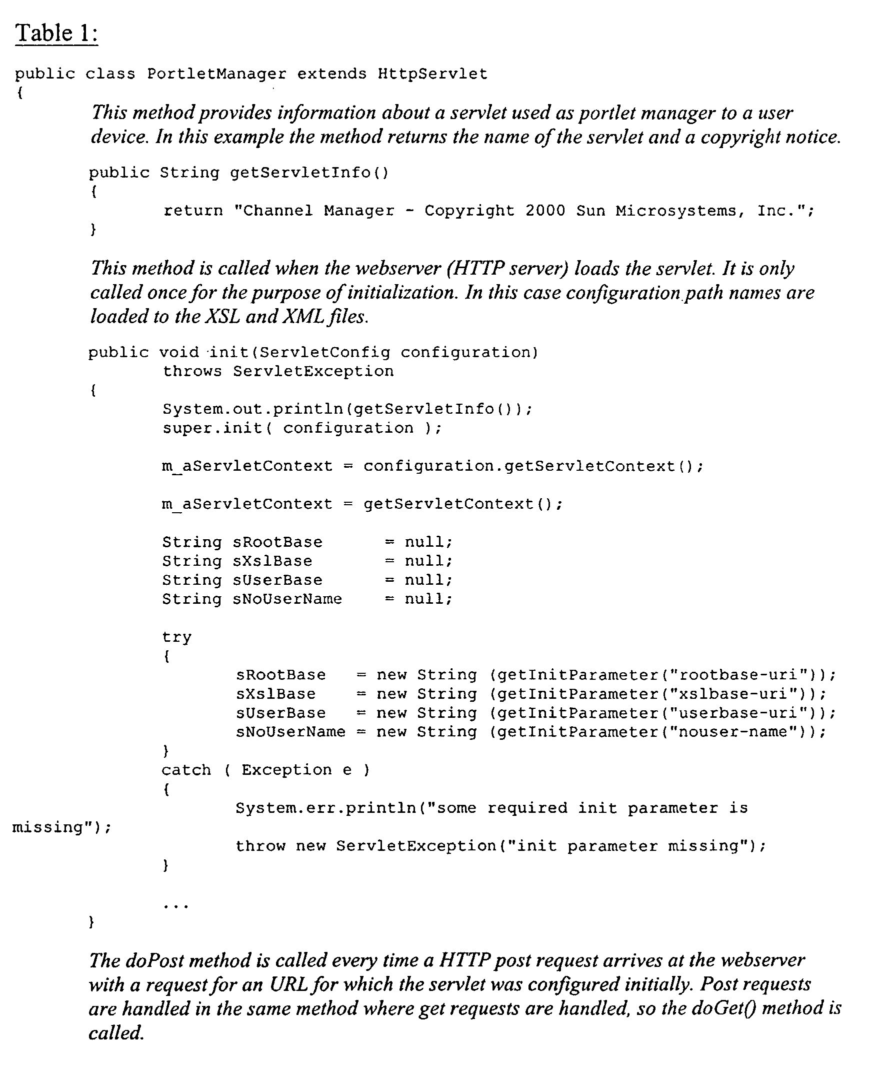

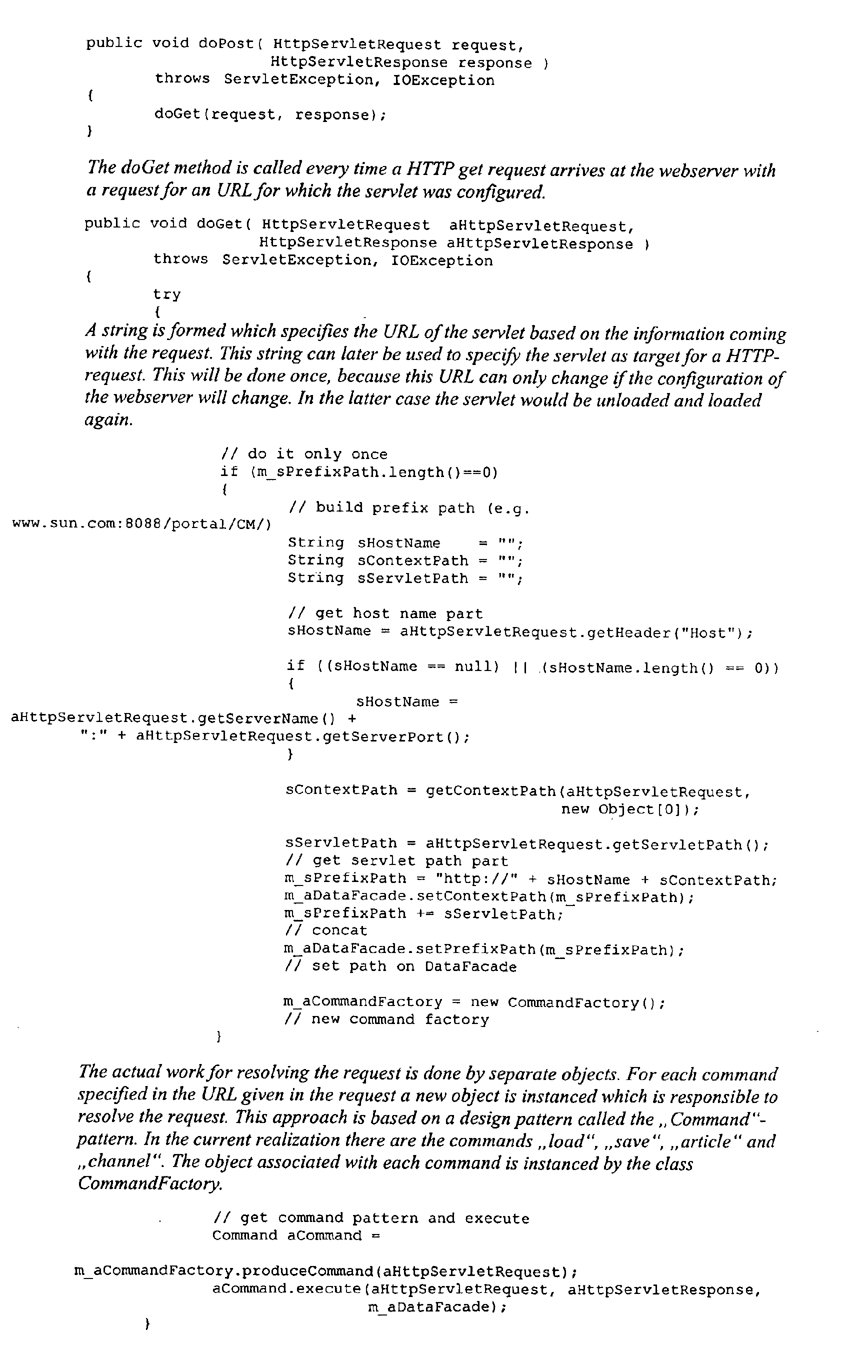

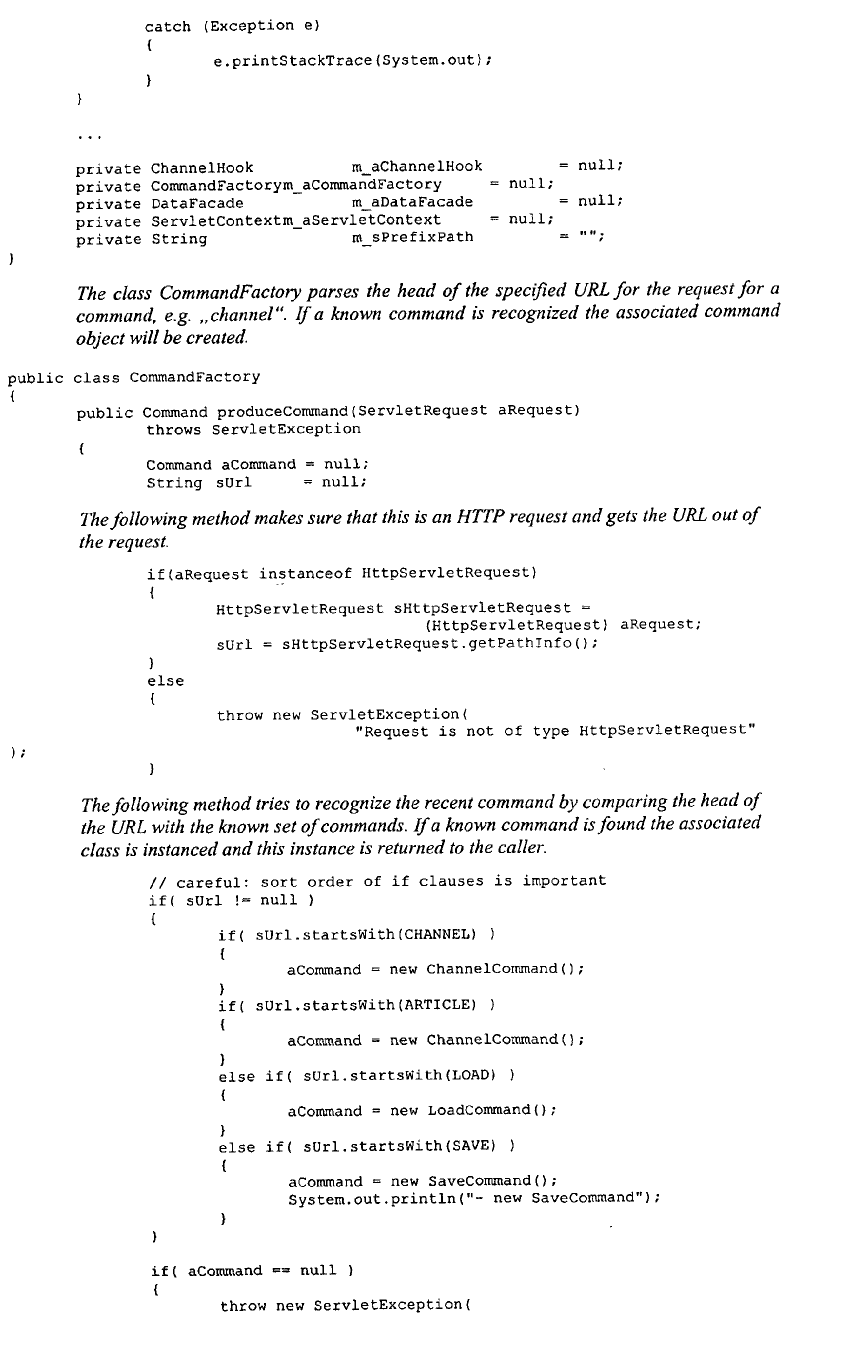

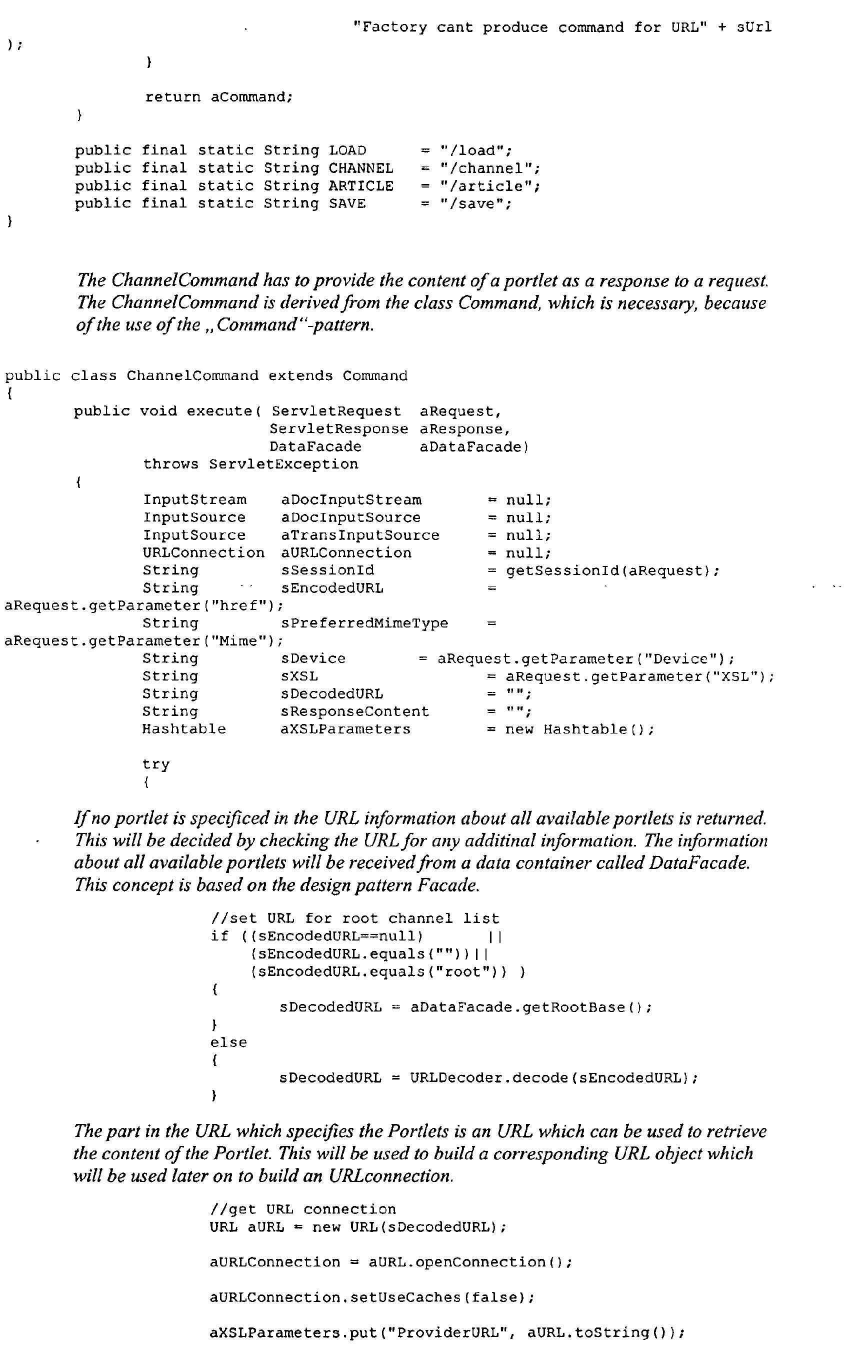

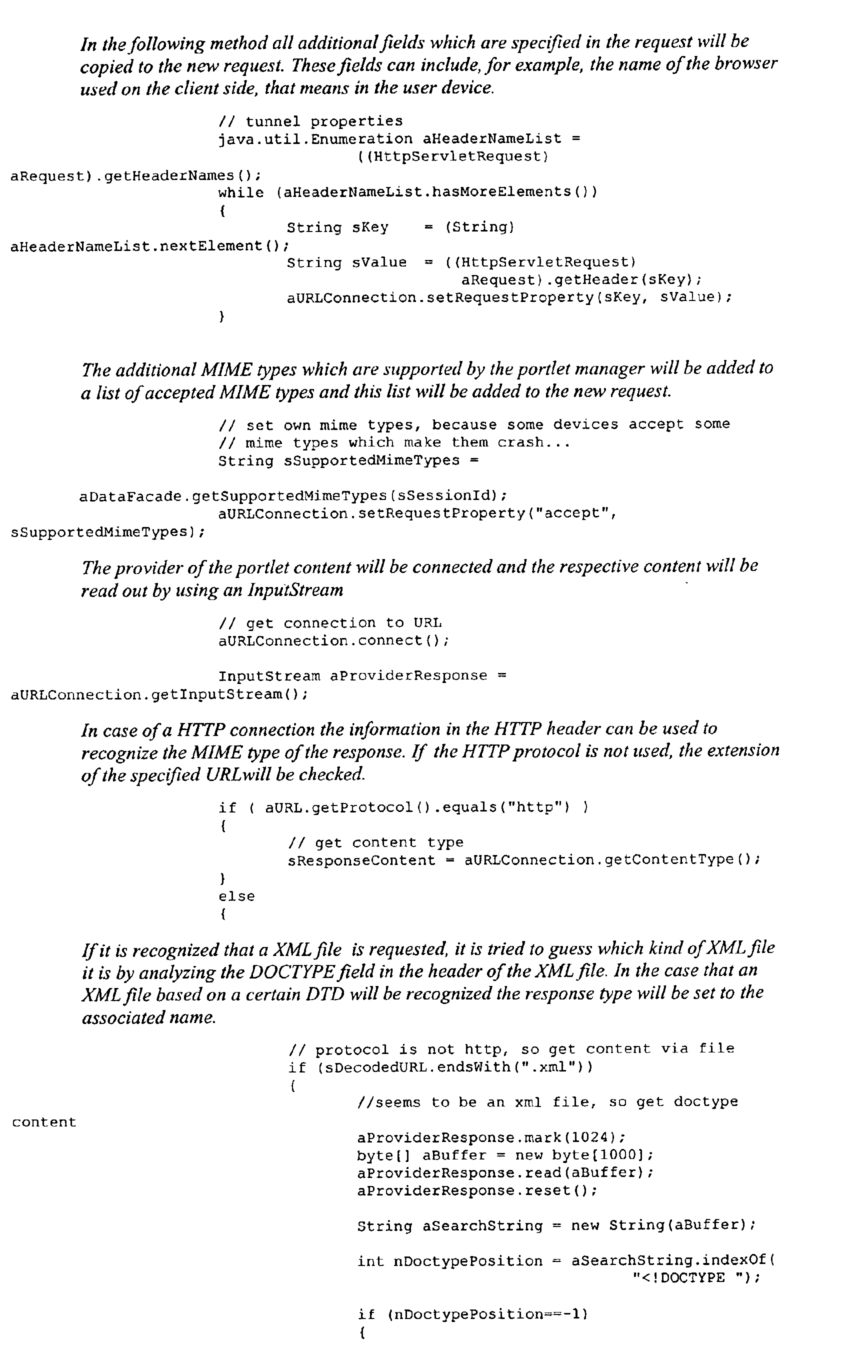

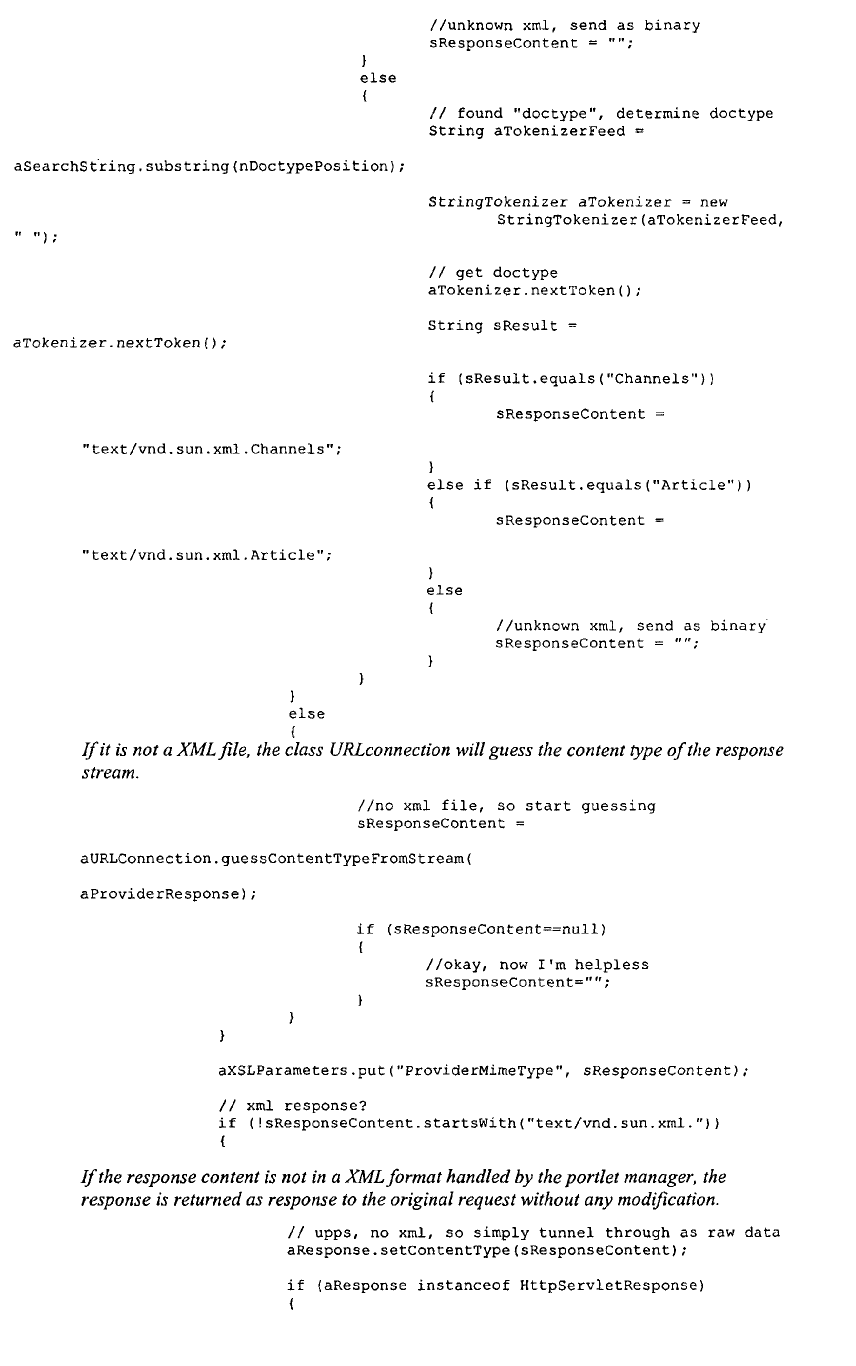

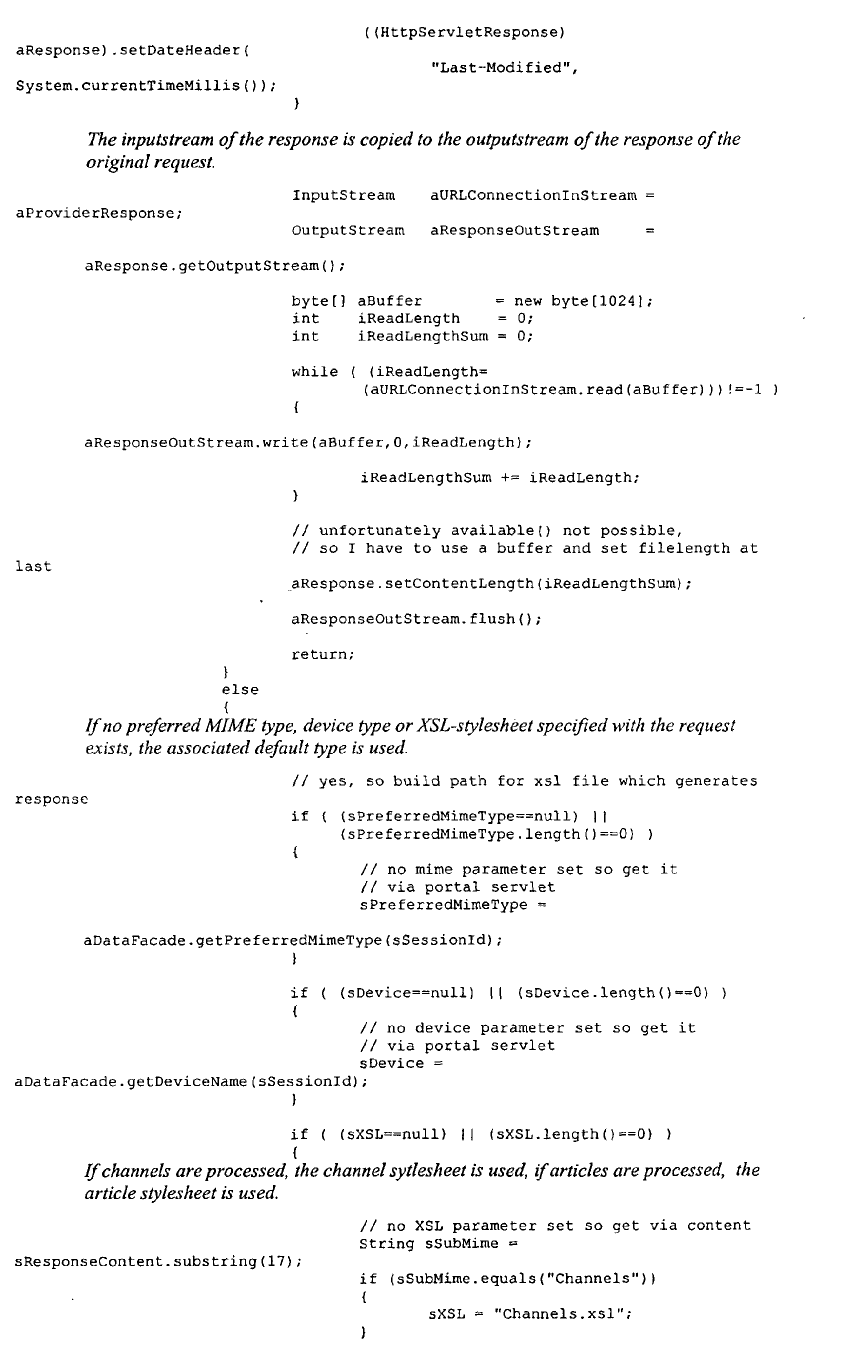

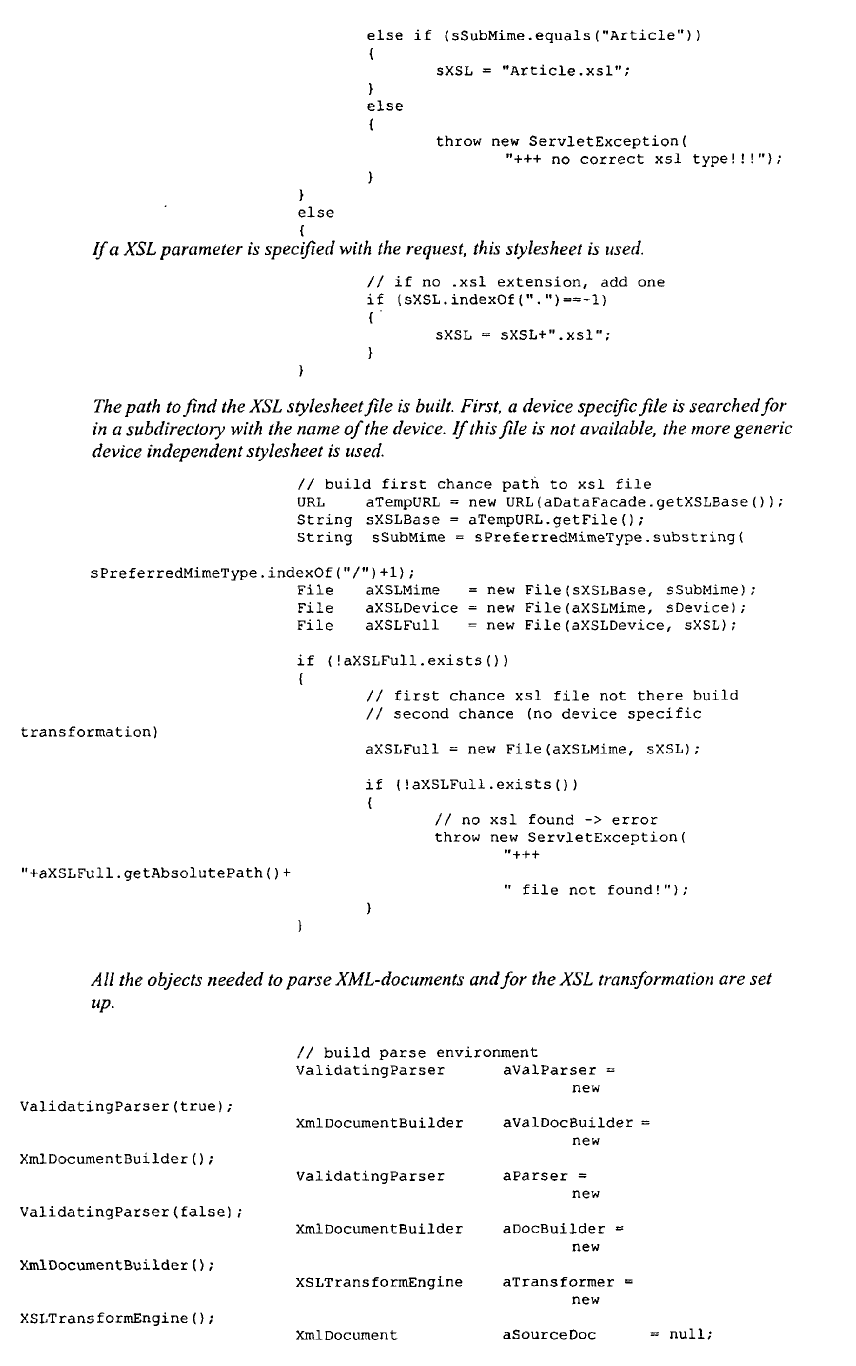

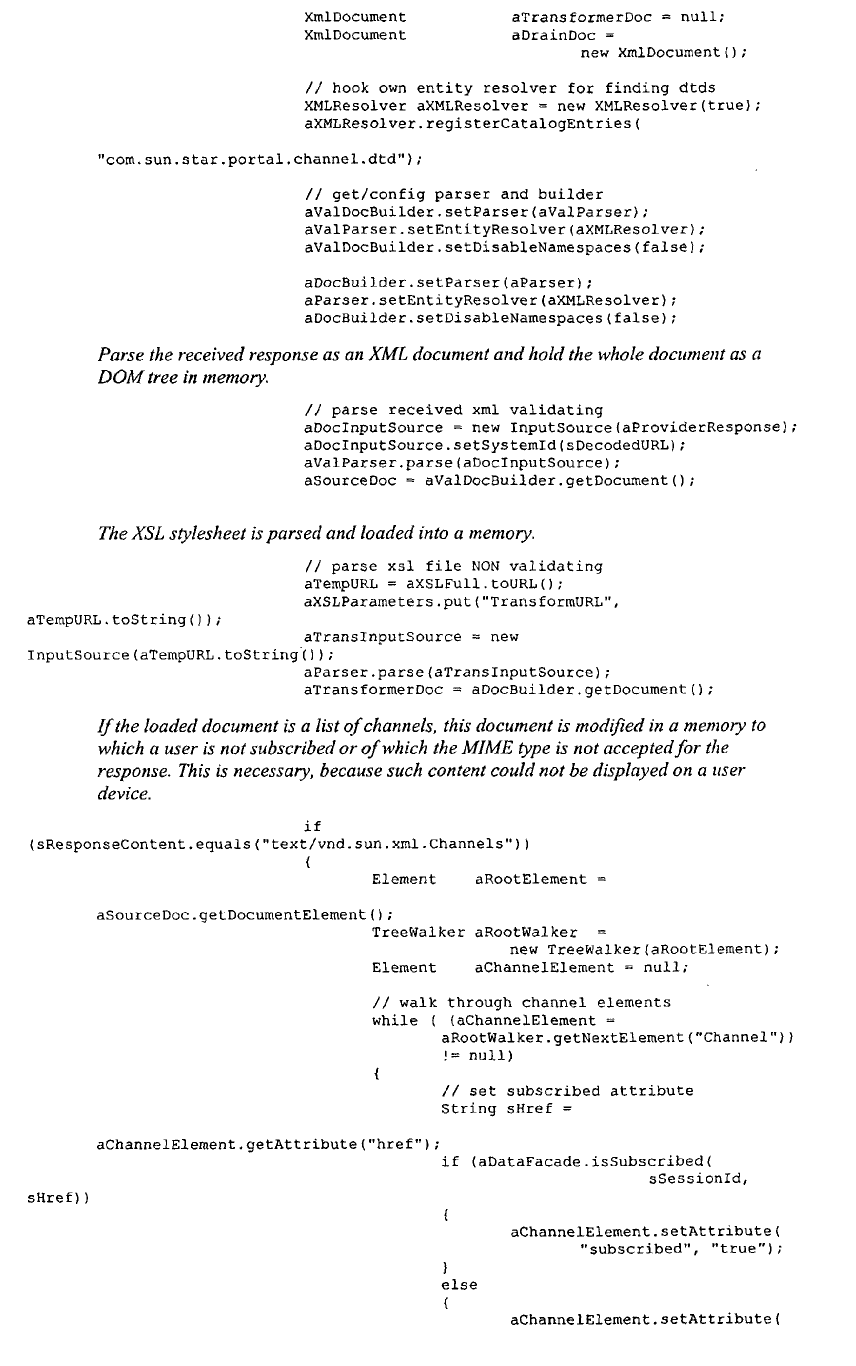

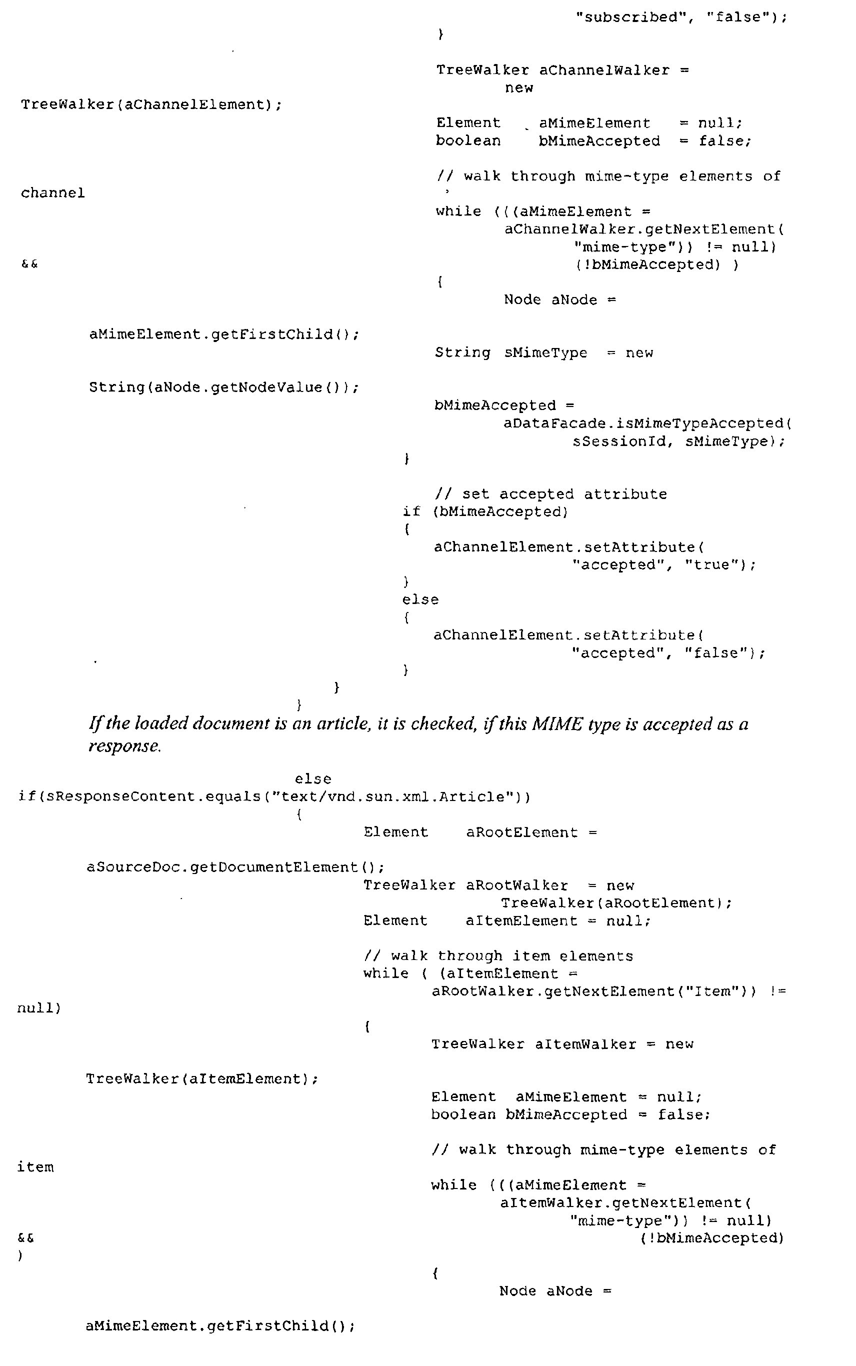

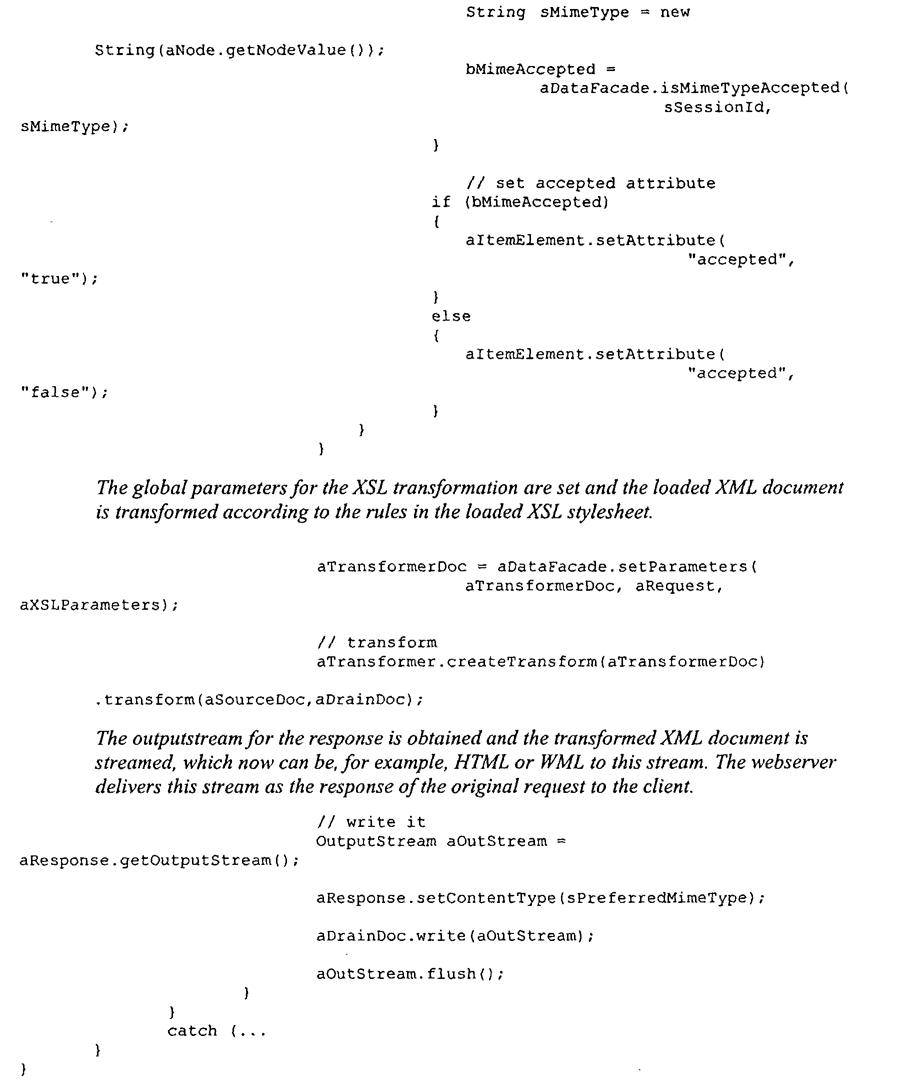

## Claims

1. A method for presenting data on a user device comprising:
receiving a request from said user device for said data;
identifying presentation requirements of said user device; and
selecting a presentation scheme for said data in accordance with said presentation requirements wherein upon application of said presentation scheme to said data, new data presentable on said user device is generated.

2. The method of Claim 1, further comprising:
applying said presentation scheme to said data to create said new presentable data.

3. The method of Claim 2, wherein said applying said presentation scheme to said data is performed by said user device.

4. The method of Claim 2, further comprising:
transmitting said new data to said user device to allow the presentation of said new data on said user device.

5. The method of Claim 1, further comprising retrieving said data.

6. The method of Claim 5, further comprising:
applying said presentation scheme to said retrieved data to create said new presentable data.

7. The method of Claim 1, wherein said request includes a command.

8. The method of Claim 7, wherein the command is selected from a group of commands consisting of load, save, article, and channel.

9. The method of Claim 7, wherein the command is a command article.

10. The method of Claim 7, wherein the command is a command channel.

11. A method for providing data to a user device comprising:
receiving a request from a user device generated by selection of a portlet identification object on the user device;
transferring said request to a portlet wherein said portlet retrieves data specified in said request over a network and further wherein said data has one format in a plurality of source data formats;
analyzing said request to determine a user data format that is supported by said user device;
selecting a presentation scheme to convert said data from said source data format to said user data format; and
converting said data from said source data format to said user data format using said presentation scheme.

12. The method of Claim 11, wherein said selecting a presentation scheme comprises selecting an XSL-stylesheet.

13. The method of Claim 11, wherein said plurality of source data formats are MIME types.

14. The method of Claim 11, wherein said user data format is specified by a MIME type.

15. The method of Claim 11, wherein said receiving is performed by a web server.

16. The method of Claim 11, wherein said transferring said request is performed by a portlet manager.

17. The method of Claim 11. wherein said request includes a command.

18. The method of Claim 17, wherein the command is selected from a group of commands consisting of load, save, article, and channel.

19. The method of Claim 17, wherein the command is a command article.

20. The method of Claim 17, wherein the command is a command channel.

21. A method for providing data to a user device comprising:
receiving a request from a user device generated by selection of a portlet identification object on the user device by a web server;
analyzing said request by said web server to determine whether said request is for content associated with a portlet;
transferring said request to a presentation manager upon determining that said request is for said content associated with a portlet;
passing said request to said portlet by said presentation manager wherein said portlet retrieves data specified in said request over a network and further wherein said data has a source MIME type;
analyzing said request to identify a user MIME type;
selecting a presentation scheme from a plurality of presentation schemes based upon said user MIME type and said source MIME type; and
converting said data from said source MIME type to said user MIME type using said presentation scheme.

22. The method of Claim 21, wherein said selecting a presentation scheme comprises selecting an XSL-stylesheet.

23. The method of Claim 21, wherein said request includes a command.

24. The method of Claim 23, wherein the command is selected from a group of commands consisting of load, save, article, and channel.

25. The method of Claim 21, wherein the command is a command article.

26. The method of Claim 21 wherein the command is a command channel.

27. A presentation manager server system comprising:
a web server;
a presentation manager coupled to said web server;
at least one portlet coupled to said presentation manager.

28. The presentation manager server system of Claim 27, wherein said at least one portlet comprises a mail portlet.

29. The presentation manager server system of Claim 27, wherein said at least one portlet comprises a resource description framework portlet.

30. The presentation manager server system of Claim 27, wherein said at least one portlet comprises an internal network information portlet.

31. The presentation manager server system of Claim 27, further comprising a storage medium having stored thereon a plurality of presentation schemes.

32. The presentation manager server system of Claim 27, wherein said web server comprises a servlet container.

33. The presentation manager server system of Claim 27, wherein said presentation manager comprises a servlet.

34. The presentation manager server system of Claim 27, further comprising a plurality of user devices coupled to said web server.

35. A computer program product having stored thereon computer instructions for a method, comprising:
receiving a request from said user device for said data;
identifying presentation requirements of said user device; and
selecting a presentation scheme for said data in accordance with said presentation requirements wherein upon application of said presentation scheme to said data, new data presentable on said user device is generated.

36. A computer program product having stored thereon computer instructions for a method, comprising:
receiving a request from a user device generated by selection of a portlet identification object on the user device;
transferring said request to a portlet wherein said portlet retrieves data specified in said request over a network and further wherein said data has one format in a plurality of source data formats;
analyzing said request to determine a user data format that is supported by said user device;
selecting a presentation scheme to convert said data from said source data format to said user data format; and
converting said data from said source data p format to said user data format using said presentation scheme.

37. A computer program product having stored thereon computer instructions for a method, comprising:
receiving a request from a user device generated by selection of a portlet identification object on the user device by a web server;
analyzing said request by said web server to determine whether said request is
for content associated with a portlet;
transferring said request to a presentation manager upon determining that said request is for said content associated with a portlet;
passing said request to said portlet by said presentation manager wherein said portlet retrieves data specified in said request over a network and further wherein said data has a source MIME type;
analyzing said request to identify a user MIME type;
selecting a presentation scheme from a plurality of presentation schemes based upon said user MIME type and said source MIME type; and
converting said data from said source MIME type to said user MIME type using said presentation scheme.

38. A method for presenting data on a user device with presentation requirements relating to the presentation of said data on said user device, comprising the following steps:
a) receiving a request from said user device for said data by data presentation management means,
b) identifying said presentation requirements of said user device to said data presentation management means,
c) selecting a presentation scheme for said data in accordance with said presentation requirements, so that said presentation scheme can be applied to said data to create presentable data to allow the presentation of said data on said user device.

39. A method according to claim 38, wherein step c) is carried out by said data presentation management means.

40. A method according to any of the preceding claims 38 or 39, comprising the following further step:
d) applying said presentation scheme to said data to create presentable data to allow the presentation of said data on said user device.

41. A method according to claim 40, wherein step d) is carried out by said data presentation management means.

42. A method according to claim 41, wherein step d) is carried out by said user device.

43. A method according to any of claims 38 to 42, comprising the following step:
e) transmitting said presentable data to said user device to allow the presentation of said data on said user device.

44. A method according to any of the preceding claims 38 to 43, wherein said data are retrieved by said data presentation management means before the application of said selected presentation scheme.

45. A method for obtaining data by a user device having presentation requirements relating to the presentation of said data on said user device, comprising the following steps:
a) submitting a request by said user device to data presentation management means for obtaining said data from said data presentation management means, said request causing the identification of said presentation requirements of said user device to said data presentation management means, the selection of a presentation scheme for said data in accordance with said presentation requirements of said user device by said data presentation management means, said request further causing the application of said selected presentation scheme to said data to create presentable data, and
b) receiving in said user device said presentable data to allow the presentation of said data by said user device.

46. A method for obtaining data by a user device having presentation requirements relating to the presentation of said data on said user device, comprising the following steps:
a) submitting a request by said user device to data presentation management means for obtaining said data from said data presentation management means, said request causing the identification of said presentation requirements of said user device to said data presentation management means and the selection of a presentation scheme for said data in accordance with said presentation requirements of said user device by said data presentation management means,
b) receiving in said user device said selected presentation scheme for said data,
c) applying in said user device said selected presentation scheme on said data to create presentable data.

47. A method according to the preceding claim 46, wherein said user device receives said data via said data management presentation means.

48. A method according to any of the preceding claims 38 to 47, wherein said presentation requirements of said user device are determined based on information about said user device.

49. A method according to any of the preceding claims 38 to 48, wherein said data includes at least one function which may be utilized by means of said user device.

50. A method according to any of the preceding claims 38 to 49, wherein said user device is a computer system including at least a processor, a storage medium and an i-/o-interface.

51. A method according to any of the preceding claims 38 to 50, wherein said data is retrieved via at least one portlet.

52. A method according to the preceding claim 51, wherein representations of at least two of said portlets are arranged in tree-like organization on said user device.

53. A computer program for carrying out a method according to any of the preceding method claims on a computer system.

54. A data carrier for storing a computer program for carrying out a method according to any of the preceding method claims on a computer system.

55. A method for using a computer system for carrying out a method according to any of the preceding method claims.

56. A computer system comprising at least a processor, a memory and an i-/o-interface for representing data depending on presentation requirements of a user device relating to the presentation of said data on said user device, comprising data presentation management means, wherein said data presentation management means include:
a) a receiving module for receiving a request of said user device for said data,
b) an identifying module for identifying said presentation requirements of said user device, and
c) a selecting module for selecting a presentation scheme for said data in accordance with said presentation requirements.

57. A computer system according to the preceding claim 56, wherein said data presentation management means further include:
d) a retrieving module for retrieving said data.

58. A computer system according to any of the preceding computer system claims 56 or 57, wherein said data presentation management means further include:
e) an applying module for applying said selected presentation scheme to said data to create presentable data which may be presented by said user device.

59. A computer system according to any of the preceding computer system claims 56 to 58, wherein said data presentation management means further include:
f) a transmitting module for transmitting said presentable data to said user device to allow the presentation of said data on said user device.

60. A computer system according to any of the preceding computer system claims 56 to 59, wherein said computer system includes a webserver.

61. A computer system according to any of the preceding computer system claims 56 to 60, wherein said retrieving module for retrieving said data includes at least one portlet.

62. A computer system according to the preceding claim 61, wherein representations of at least two of said portlets are arranged in a tree-like organization.
